(19) 

Europäisches Patentamt

European Patent Office

Office européen des brevets

(11) **EP 4 580 254 A1**

(12) **EUROPEAN PATENT APPLICATION**
published in accordance with Art. 153(4) EPC

(43) Date of publication:
**02.07.2025 Bulletin 2025/27**

(21) Application number: **23884765.1**

(22) Date of filing: **27.10.2023**

(51) International Patent Classification (IPC):
**H04W 36/00** (2009.01)

(52) Cooperative Patent Classification (CPC):
**H04W 36/00; H04W 36/08; H04W 36/30**

(86) International application number:
**PCT/CN2023/127192**

(87) International publication number:
**WO 2024/093833 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.11.2022 CN 202211372936**

(71) Applicant: **Huawei Technologies Co., Ltd.
Shenzhen, Guangdong 518129 (CN)**

(72) Inventors:
• **ZHU, Shichao**
**Shenzhen, Guangdong 518129 (CN)**
• **SUN, Fei**
**Shenzhen, Guangdong 518129 (CN)**
• **ZHU, Yuanping**
**Shenzhen, Guangdong 518129 (CN)**
• **SHI, Yulong**
**Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND COMMUNICATION APPARATUS**

(57) This application provides a communication method and a communication apparatus, and relates to the field of communication technologies. This application may be applied to migration of a DU in an IAB network. The method is applied to a first CU or a module in the first CU. The method includes: receiving a first message, where the first message includes an ID that identifies an MT of an IAB node in a third CU, and an ID of the third CU; determining, based on the first message, whether to perform migration of a DU of the IAB node; and sending a second message to the IAB node when determining to perform migration of the DU of the IAB node, where the second message indicates the DU of the IAB node to set up an F1 interface with the third CU. The solution in embodiments of this application may support the DU migration triggered by a topology change of the MT, and resolves a problem in which DU migration in a continuous partial migration process is not supported in a conventional technology.

FIG. 12

EP 4 580 254 A1

## Description

This application claims priority to Chinese Patent Application No. 202211372936.8, filed with the China National Intellectual Property Administration on November 3, 2022 and entitled "COMMUNICATION METHOD AND COMMUNICATION APPARATUS", which is incorporated herein by reference in its entirety.

## TECHNICAL FIELD

This application relates to the communication field, and in particular, to a communication method and a communication apparatus.

## BACKGROUND

In comparison with a fourth generation mobile communication system, fifth generation mobile communication (5G) has stricter requirements, such as a capacity increased by 1000 times, a requirement for wider coverage, and ultra-high reliability and an ultra-low delay, on network performance indicators. Considering that high-frequency carriers have rich frequency resources, it is increasingly popular to perform high-frequency small cell networking in hotspot areas, to satisfy an ultra-high capacity requirement of 5G. The high-frequency carriers have a poor propagation feature, are severely attenuated if blocked, and have a small range of coverage. Therefore, a large quantity of small cells need to be densely deployed. Correspondingly, it is costly to provide fiber backhaul for the large quantity of densely deployed small cells, and construction is difficult. Therefore, an economical and convenient backhaul solution is needed. In addition, in consideration of the requirement for wide coverage, network coverage is provided in some remote areas, but optical fiber deployment is difficult and costly. Therefore, a flexible and convenient access and backhaul solution needs to be designed. An integrated access and backhaul (integrated access and backhaul, IAB) technology provides a thinking for resolving the foregoing two problems. A wireless transmission solution is used for both an access link (access link) and a backhaul link (backhaul link) of the IAB technology, so that optical fiber deployment is reduced.

In an IAB network, a relay node, or referred to as an IAB node (IAB node), may provide a wireless access service for a user equipment (UE, user equipment). Transmission of service data of the UE is performed by the IAB node connected to an IAB donor (IAB donor) over a radio backhaul link. The IAB node includes a mobile terminal (mobile terminal, MT) part and a distributed unit (distributed unit, DU) part. When being oriented to a parent node of the IAB node, the IAB node may serve as a terminal device, that is, a role of the MT. When being oriented to a child node (the child node may be another IAB node or UE) of the IAB node, the IAB node is considered as a network device, that is, a role of the DU. The IAB donor is an access network element having a complete base station (for example, a gNB) function, and includes a central unit (central unit, CU) and a distributed unit (distributed unit, DU). The IAB donor is connected to a core network (for example, connected to a 5G core network) that serves the UE.

In discussion of Rel-17, cross-CU migration in the IAB node is classified into two implementations: full migration (full migration) and partial migration (partial migration). In the partial migration, cross-CU handover occurs on an MT of an IAB node, namely, a boundary node (boundary node), in which migration is performed, but a DU of the boundary node still maintains an F1 connection to a source CU. In the full migration, a DU of a boundary node needs to set up an F1 connection to a target (target) CU. An essential difference between the full migration and the partial migration lies in whether DU migration needs to be performed (actually, a new logical DU is generated and then an F1 interface is set up with the target CU, which may also be usually described as the "DU migration" from a macro perspective of the IAB node). In a Rel-18 mobile IAB project initiation document, the full migration is a mandatory feature. However, this does not mean that the full migration needs to be performed for each time of migration in the IAB node. In discussion in previous several meetings of Rel-18, a mainstream view is to use continuous partial migration as a baseline, and perform DU migration when the DU migration needs to be performed. A conclusion of a current meeting is that in the continuous partial migration, the CU determines whether to perform DU migration. However, no specific solution is provided currently. Therefore, a solution of performing DU migration in the continuous partial migration needs to be studied.

## SUMMARY

Embodiments of this application disclose a communication method and a communication apparatus, to implement DU migration in continuous partial migration.

According to a first aspect, an embodiment of this application provides a communication method. The method is applied to a first CU or a module in the first CU. The method includes: receiving a first message, where the first message includes an identifier (identifier, ID) that identifies an MT of an IAB node in a third CU, and an ID of the third CU; determining, based on the first message, whether to perform migration of a DU of the IAB node; and sending a second message to the IAB node when determining to perform migration of the DU of the IAB node, where the second message indicates the DU of

EP 4 580 254 A1

the IAB node to set up an F1 interface with the third CU.

In this embodiment of this application, after receiving the first message, the first CU determines, based on the first message, whether to perform migration of the DU of the IAB node. That the first CU receives the first message is a trigger condition for the first CU to determine whether to migrate the DU of the IAB node. Therefore, this embodiment of this application provides the trigger condition for the first CU to determine whether to migrate the DU of the IAB node. The first CU determines, based on the first message, whether to perform migration of the DU of the IAB node. It can be learned that this embodiment of this application further provides a basis for the first CU to determine whether to migrate the DU of the IAB node. Sending the second message to the IAB node when determining to perform migration of the DU of the IAB node is a DU migration manner provided in this embodiment of this application. The solution in embodiments of this application may support the DU migration triggered by a topology change of the MT, and resolves a problem in which DU migration in a continuous partial migration process is not supported in a conventional technology.

In a possible implementation, the second message indicates the DU of the IAB node to generate a new logical DU and set up the F1 interface with the third CU.

In this implementation, the first CU indicates, by sending the second message, the DU of the IAB node to generate the new logical DU and sets up the F1 interface with the third CU, so that the migration of the DU of the IAB node is implemented.

In a possible implementation, the first message further includes an IP address of the third CU or an IP address of a donor DU managed by the third CU.

In this implementation, the first message further includes the IP address of the third CU or the IP address of the donor DU managed by the third CU, so that the first CU determines, based on the IP address of the third CU or the IP address of the donor DU managed by the third CU, whether to perform migration of the DU of the IAB node.

In a possible implementation, the determining, based on the first message, whether to perform migration of a DU of the IAB node includes: determining, based on the first message, whether the first CU can reach, without using a core network, the third CU or the donor DU managed by the third CU; determining, based on the first message, whether the first CU can set up an Xn interface with the third CU; or determining, based on the first message, whether the first CU can reach, through IP routing, the third CU or the donor DU managed by the third CU. It should be understood that, if the first CU cannot reach, without using the core network, the third CU or the donor DU managed by the third CU, it is determined to perform migration of the DU of the IAB node; or if the first CU can reach, without using the core network, the third CU or the donor DU managed by the third CU, it is determined not to perform migration of the DU of the IAB node. If the first CU can set up the Xn interface with the third CU, it is determined not to perform migration of the DU of the IAB node; or if the first CU cannot set up the Xn interface with the third CU, it is determined to perform migration of the DU of the IAB node. If the first CU can reach, through the IP routing, the third CU or the donor DU managed by the third CU, it is determined not to perform migration of the DU of the IAB node; or if the first CU cannot reach, through the IP routing, the third CU or the donor DU managed by the third CU, it is determined to perform migration of the DU of the IAB node.

In this implementation, three manners of determining, based on the first message, whether to perform migration of the DU of the IAB node are provided, so that whether to perform migration of the DU of the IAB node can be properly determined.

In a possible implementation, there is a radio resource control (radio resource control, RRC) connection between the MT and a second CU, or a topology under the third CU is a topology to which the MT changes from a topology under the second CU.

In this implementation, the problem in which the DU migration in the continuous partial migration process is not supported in the conventional technology can be resolved.

In a possible implementation, the first message indicates any one of the following: The MT is to be handed over from the topology under the second CU to the topology under the third CU, the MT has completed the handover from the topology under the second CU to the topology under the third CU, or a radio link failure occurs between the MT and the second CU and the MT accesses the topology under the third CU.

In this implementation, the first message may be triggered in time, and the first CU determines whether to migrate the DU of the IAB node.

In a possible implementation, there is a radio resource control RRC connection between the MT and a second CU; and the method further includes: sending a third message to the second CU when determining to perform migration of the DU of the IAB node, where the third message is used for requesting the second CU to configure, in a topology under the second CU, a resource for the F1 interface between the DU of the IAB node and the third CU.

In this implementation, the third message is sent to the second CU when it is determined to perform migration of the DU of the IAB node, so that the second CU configures, in the topology under the second CU, the resource for the F1 interface between the DU of the IAB node and the third CU. This can prevent the DU of the IAB node from interacting with the third CU through an NG interface, so that the DU migration is accelerated.

In a possible implementation, the first message indicates that the MT is to be handed over from the topology under the second CU to a topology under the third CU; and after the sending a third message to the second CU, the method

3

further includes: receiving a fourth message, where the fourth message indicates that the F1 interface between the DU of the IAB node and the third CU has been set up.

In this implementation, the fourth message is received, so that it can be learned that the F1 interface between the DU of the IAB node and the third CU has been set up.

In a possible implementation, after the receiving a fourth message, the method further includes: sending a fifth message to the second CU after sending a first handover command to a terminal device, where the first handover command indicates the terminal device to be handed over to a target cell served by the DU of the IAB node, and the fifth message indicates that the first CU has sent the first handover command.

In this implementation, the fifth message is sent to the second CU, so that the second CU sends a handover command to the MT of the IAB node in time.

In a possible implementation, the method further includes: initiating, to the third CU, an IAB transport migration management procedure in partial migration when determining not to perform migration of the DU of the IAB node, where the procedure is used for cross-topology migration of traffic.

In this implementation, transmission of traffic between the first CU and the IAB node can be performed through the topology under the third CU, so that service continuity of a UE served by the IAB node is ensured.

In a possible implementation, the initiating, to the third CU, an IAB transport migration management procedure in partial migration includes: sending a sixth message to an access and mobility management function (access and mobility management) network element, where the sixth message includes an IP address of traffic of the IAB node under the third CU and quality of service QoS information of the traffic of the IAB node; and receiving a seventh message from the access and mobility management function network element, where the seventh message includes backhaul link information under the third CU, and differentiated services code point (differentiated services code point, DSCP) or flow label (Flow Label) information of the traffic of the IAB node.

In this implementation, the access and mobility management function network element can obtain the backhaul link information under the third CU, and a DSCP or a flow label of the traffic of the IAB node.

According to a second aspect, an embodiment of this application provides another communication method. The method is applied to a second CU or a module in the second CU, and the method includes: generating a first message; and sending the first message to a first CU, where the first message indicates any one of the following: An MT of an IAB node is to be handed over from a topology under the second CU to a topology under a third CU, the MT has completed the handover from the topology under the second CU to the topology under the third CU, or a radio link failure occurs between the MT and the second CU and the MT accesses the topology under the third CU.

In this embodiment of this application, the first message is sent to the first CU, to trigger the first CU to determine whether to migrate the DU of the IAB node. A trigger condition for the first CU to determine whether to migrate the DU of the IAB node is provided.

In a possible implementation, after the sending the first message to a first CU, the method further includes: receiving a third message from the first CU; and configuring, based on the third message and in the topology under the second CU, a resource for an F1 interface between a DU of the IAB node and the third CU.

In this implementation, the second CU configures, in the topology under the second CU, the resource for the F1 interface between the DU of the IAB node and the third CU, to help set up the F1 interface between the DU of the IAB node and the third CU.

In a possible implementation, before the sending the first message to a first CU, the method further includes: receiving an eighth message from the third CU, where the eighth message indicates any one of the following: The MT of the IAB node is to be handed over to the topology under the third CU, the MT has been handed over to the topology under the third CU, or the MT has accessed the topology under the third CU after a radio link failure occurs between the MT and the second CU. Receiving the eighth message is a trigger condition for the second CU to send the first message to the first CU.

In this implementation, the eighth message from the third CU is received, so that the first message is sent to the first CU in time. That is, the first CU is triggered to determine whether to perform migration of the DU of the IAB node.

In a possible implementation, the eighth message includes an IP address of the third CU and/or an IP address of a donor DU managed by the third CU.

In this implementation, the eighth message includes the IP address of the third CU and/or the IP address of the donor DU managed by the third CU, so that the second CU provides the first CU with the IP address of the third CU and/or the IP address of the donor DU managed by the third CU.

In a possible implementation, the first message includes an ID that identifies the MT in the third CU, and an ID of the third CU.

In this implementation, the first CU may determine, based on the first message, whether to perform migration of the DU of the IAB node.

In a possible implementation, the method further includes: receiving a fifth message from the first CU, where the fifth message indicates that the first CU has sent a first handover command to a terminal device, and the first handover command is used for the terminal device to be handed over to a target cell served by the DU of the IAB node; and sending a second handover command to the MT, where the second handover command is used for the MT of the IAB node to be handed over to the topology under the third CU.

In this implementation, the MT of the IAB node can be handed over to the topology under the third CU in time.

According to a third aspect, an embodiment of this application provides another communication method. The method is applied to a third CU or a module in the third CU, and the method includes: generating a first message; and sending the first message to a first CU, where the first message indicates any one of the following: An MT of an IAB node is to be handed over from a topology under a second CU to a topology under the third CU, the MT has completed the handover from the topology under the second CU to the topology under the third CU, or a radio link failure occurs between the MT and the second CU and the MT accesses the topology under the third CU.

In this embodiment of this application, the first message is sent to the first CU, to trigger the first CU to determine whether to migrate a DU of the IAB node. A trigger condition for the first CU to determine whether to migrate the DU of the IAB node is provided.

In a possible implementation, after the sending the first message to a first CU, the method further includes: sending a fourth message to the first CU, where the fourth message indicates that an F1 interface between the DU of the IAB node and the third CU has been set up.

In this implementation, sending the fourth message to the first CU can indicate that the F 1 interface between the DU of the IAB node and the third CU has been set up.

In a possible implementation, the first message includes an ID that identifies the MT in the third CU, and an ID of the third CU.

In this implementation, the first CU may determine, based on the first message, whether to perform migration of the DU of the IAB node.

In a possible implementation, before the sending the first message to a first CU, the method further includes: sending a ninth message to the second CU or receiving a tenth message from the second CU, where the ninth message indicates that the MT is to be handed over to the topology under the third CU or the MT has changed to the topology under the third CU, and the tenth message indicates that the MT has changed to the topology under the third CU. Sending the ninth message to the second CU or receiving the tenth message from the second CU is a trigger condition for the third CU to send the first message to the first CU.

In this implementation, the first message can be sent to the first CU in time. That is, the first CU is triggered to determine whether to perform migration of the DU of the IAB node.

In a possible implementation, the ninth message includes an IP address of the third CU and/or an IP address of a donor DU managed by the third CU.

In this implementation, the ninth message includes the IP address of the third CU and/or the IP address of the donor DU managed by the third CU, so that the second CU provides the first CU with the IP address of the third CU and/or the IP address of the donor DU managed by the third CU.

In a possible implementation, the tenth message includes an ID of the MT under the first CU.

In this implementation, the tenth message includes the ID of the MT under the first CU, so that the third CU sends the first message to the first CU based on the tenth message.

In a possible implementation, the method further includes: responding to an IAB transport migration management procedure in partial migration initiated by the first CU to the third CU.

In a possible implementation, the responding to an IAB transport migration management procedure in partial migration initiated by the first CU to the third CU includes: receiving an eleventh message from an access and mobility management function network element, where the eleventh message includes an IP address of traffic of the IAB node under the third CU and QoS information of the traffic of the IAB node; and sending a twelfth message to the access and mobility management function network element, where the twelfth message includes backhaul link information under the third CU, and differentiated services code point or flow label information of the traffic of the IAB node.

In this implementation, the access and mobility management function network element provides the first CU with the backhaul link information under the third CU, and a DSCP or a flow label of the traffic of the IAB node.

According to a fourth aspect, an embodiment of this application provides another communication method. The method is applied to an IAB node or a module in the IAB node, and the method includes: handing over an MT of the IAB node from a topology under a second CU to a topology under a third CU; and sending a first message to a first CU, where the first message includes an ID that identifies the MT in the third CU, for example, an XnAP ID of the MT under the third CU. For example, after the MT of the IAB node is handed over to the topology under the third CU, a DU of the IAB node sends the first message to the first CU. For another example, after the MT of the IAB node starts to be handed over to the topology under the third CU, the DU of the IAB node sends the first message to the first CU. For another example, in a process in which the MT of the IAB node is handed over to the topology under the third CU, the DU of the IAB node sends the first message to the first CU.

In this embodiment of this application, the first message is sent to the first CU, to trigger the first CU to determine whether to migrate the DU of the IAB node. A trigger condition for the first CU to determine whether to migrate the DU of the IAB node is provided.

In a possible implementation, the first message includes an IP address of the third CU and/or an IP address of a donor DU managed by the third CU.

In this implementation, the first message includes the IP address of the third CU and/or the IP address of the donor DU managed by the third CU, so that the first CU determines, based on the IP address of the third CU and/or the IP address of the donor DU managed by the third CU, whether to perform migration of the DU of the IAB node.

In a possible implementation, after the DU of the IAB node sends the first message to the first CU, the method further includes: receiving a second message from the first CU; and setting up an F1 interface with the third CU based on the second message. For example, the DU of the IAB node generates a new logical DU and sets up the F1 interface with the third CU.

In this implementation, the F1 interface may be set up with the third CU in time.

According to a fifth aspect, an embodiment of this application provides a communication method. The method is applied to an IAB node or a module in the IAB node, and the method includes: sending a first message to a CU, where the first message indicates a cell that the IAB node expects to activate; and receiving a second message, where the second message is used for activating the cell that the IAB node expects to activate.

In this embodiment of this application, a DU of the IAB node sends the first message to the CU, and receives the second message, so that the cell that the IAB node expects to activate can be activated.

In a possible implementation, the first message further indicates a cell that the IAB node expects to turn off; and the method further includes: receiving a third message, where the third message is used for turning off the cell that the IAB node expects to turn off.

In this implementation, the DU of the IAB node receives the third message, so that the cell that the IAB node expects to turn off is turned off in time.

In a possible implementation, that a DU of the IAB node sends the first message to the CU includes: sending the first message to the CU when a cell identity conflict is detected.

In this implementation, the first message can be sent in time.

According to a sixth aspect, an embodiment of this application provides another cell handover method. The method is applied to a CU, and the method includes:

receiving a first message from a DU of an IAB node, where the first message indicates a cell that the IAB node expects to activate; and sending a second message to the DU of the IAB node, where the second message is used for activating the cell that the IAB node expects to activate.

In this embodiment of this application, the second message is sent to the DU of the IAB node, so that the cell that the IAB node expects to activate can be activated.

In a possible implementation, the first message further indicates a cell that the IAB node expects to turn off; and after the CU sends the second message to the DU of the IAB node, the method further includes: after receiving a handover complete message from a terminal device, sending a third message to the DU of the IAB node, where the third message is used for turning off the cell that the IAB node expects to turn off, and the handover complete message indicates that the terminal device has been handed over to the cell that the IAB node expects to activate.

In this implementation, the third message is sent to the DU of the IAB node, so that the cell that the IAB node expects to turn off can be turned off.

In a possible implementation, after the CU sends the second message to the DU of the IAB node, the method further includes: sending a handover command to the terminal device, where the handover command is used for the terminal device to be handed over to the cell that the IAB node expects to activate.

In this implementation, the CU sends the handover command to the terminal device, so that the terminal device is handed over to the cell that the IAB node expects to activate. In this way, communication quality is improved.

According to a seventh aspect, an embodiment of this application provides a communication apparatus. The communication apparatus has a function of implementing behavior in the method embodiment in the first aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The transceiver unit is configured to receive a first message, where the first message includes an ID that identifies an MT of an IAB node in a third CU, and an ID of the third CU. The processing unit is configured to: determine, based on the first message, whether to perform migration of a DU of the IAB node; and send a second message to the IAB node through the transceiver unit when determining to perform migration of the DU of the IAB node, where the second message indicates the DU of the IAB node to set up an F1 interface with the third CU.

In a possible implementation, the processing unit is specifically configured to: determine, based on the first message, whether a first CU can reach, without using a core network, the third CU or a donor DU managed by the third CU;

determine, based on the first message, whether the first CU can set up an Xn interface with the third CU; or determine, based on the first message, whether the first CU can reach, through IP routing, the third CU or a donor DU managed by the third CU.

In a possible implementation, there is a radio resource control RRC connection between the MT and a second CU; and the processing unit is further configured to: send a third message to the second CU through the transceiver unit when determining to perform migration of the DU of the IAB node, where the third message is used for requesting the second CU to configure, in a topology under the second CU, a resource for the F1 interface between the DU of the IAB node and the third CU.

In a possible implementation, the first message indicates that the MT is to be handed over from the topology under the second CU to a topology under the third CU; and the transceiver unit is further configured to receive a fourth message, where the fourth message indicates that the F1 interface between the DU of the IAB node and the third CU has been set up.

In a possible implementation, the transceiver unit is further configured to send a fifth message to the second CU after sending a first handover command to a terminal device, where the first handover command indicates the terminal device to be handed over to a target cell served by the DU of the IAB node, and the fifth message indicates that the first CU has sent the first handover command.

In a possible implementation, the processing unit is further configured to initiate, to the third CU through the transceiver unit, an IAB transport migration management procedure in partial migration when determining not to perform migration of the DU of the IAB node, where the procedure is used for cross-topology migration of traffic.

In a possible implementation, the transceiver unit is specifically configured to: send a sixth message to an access and mobility management function network element, where the sixth message includes an IP address of the traffic of the IAB node under the third CU and quality of service QoS information of the traffic of the IAB node; and receive a seventh message from the access and mobility management function network element, where the seventh message includes backhaul link information under the third CU, and DSCP or flow label information of the traffic of the IAB node.

For possible implementations of the communication apparatus in the seventh aspect, refer to the possible implementations of the first aspect.

For technical effects brought by the possible implementations of the seventh aspect, refer to descriptions of the technical effects of the first aspect or the possible implementations of the first aspect.

According to an eighth aspect, an embodiment of this application provides another communication apparatus. The communication apparatus has a function of implementing behavior in the method embodiment in the second aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The processing unit is configured to generate a first message. The transceiver unit is configured to send the first message to a first CU, where the first message indicates any one of the following: An MT of an IAB node is to be handed over from a topology under a second CU to a topology under a third CU, the MT has completed the handover from the topology under the second CU to the topology under the third CU, or a radio link failure occurs between the MT and the second CU and the MT accesses the topology under the third CU.

In a possible implementation, the transceiver unit is further configured to receive a third message from the first CU; and the processing unit is further configured to configure, based on the third message and in the topology under the second CU, a resource for an F1 interface between a DU of the IAB node and the third CU.

In a possible implementation, the transceiver unit is further configured to receive an eighth message from the third CU, where the eighth message indicates any one of the following: The MT of the IAB node is to be handed over to the topology under the third CU, the MT has been handed over to the topology under the third CU, or the MT has accessed the topology under the third CU after a radio link failure occurs between the MT and the second CU. Receiving the eighth message is a trigger condition for the second CU to send the first message to the first CU.

In a possible implementation, the transceiver unit is further configured to: receive a fifth message from the first CU, where the fifth message indicates that the first CU has sent a first handover command to a terminal device, and the first handover command is used for the terminal device to be handed over to a target cell served by the DU of the IAB node; and send a second handover command to the MT, where the second handover command is used for the MT of the IAB node to be handed over to the topology under the third CU.

For possible implementations of the communication apparatus in the eighth aspect, refer to the possible implementations of the second aspect.

For technical effects brought by the possible implementations of the eighth aspect, refer to descriptions of the technical effects of the second aspect or the possible implementations of the second aspect.

According to a ninth aspect, an embodiment of this application provides another communication apparatus. The communication apparatus has a function of implementing behavior in the method embodiment in the third aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The processing unit is configured to generate a first message. The transceiver unit is configured to send the first message to a first CU, where the first message indicates any one of the following: An MT of an IAB node is to be handed over from a topology under a second CU to a topology under a third CU, the MT has completed the handover from the topology under the second CU to the topology under the third CU, or a radio link failure occurs between the MT and the second CU and the MT accesses the topology under the third CU.

In a possible implementation, the transceiver unit is further configured to send a fourth message to the first CU, where the fourth message indicates that an F1 interface between a DU of the IAB node and the third CU has been set up.

In a possible implementation, the transceiver unit is further configured to: send a ninth message to the second CU or receive a tenth message from the second CU, where the ninth message indicates that the MT is to be handed over to the topology under the third CU or the MT has changed to the topology under the third CU, and the tenth message indicates that the MT has changed to the topology under the third CU. Sending the ninth message to the second CU or receiving the tenth message from the second CU is a trigger condition for the third CU to send the first message to the first CU.

In a possible implementation, the processing unit is further configured to respond to an IAB transport migration management procedure in partial migration initiated by the first CU to the third CU.

In a possible implementation, the transceiver unit is further configured to: receive an eleventh message from an access and mobility management function network element, where the eleventh message includes an IP address of traffic of the IAB node under the third CU and QoS information of the traffic of the IAB node; and send a twelfth message to the access and mobility management function network element, where the twelfth message includes backhaul link information under the third CU, and differentiated services code point or flow label information of the traffic of the IAB node.

For possible implementations of the communication apparatus in the ninth aspect, refer to the possible implementations of the third aspect.

For technical effects brought by the possible implementations of the ninth aspect, refer to descriptions of the technical effects of the third aspect or the possible implementations of the third aspect.

According to a tenth aspect, an embodiment of this application provides another communication apparatus. The communication apparatus has a function of implementing behavior in the method embodiment in the fourth aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The processing unit is configured to hand over an MT of an IAB node from a topology under a second CU to a topology under a third CU. The transceiver unit is configured to send a first message to a first CU, where the first message includes an ID that identifies the MT in the third CU, for example, an XnAP ID of the MT under the third CU.

In a possible implementation, the transceiver unit is further configured to receive a second message from the first CU; and the processing unit is further configured to set up an F1 interface with the third CU based on the second message.

For possible implementations of the communication apparatus in the tenth aspect, refer to the possible implementations of the fourth aspect.

For technical effects brought by the possible implementations of the tenth aspect, refer to descriptions of the technical effects of the fourth aspect or the possible implementations of the fourth aspect.

According to an eleventh aspect, an embodiment of this application provides another communication apparatus. The communication apparatus has a function of implementing behavior in the method embodiment in the fifth aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The processing unit is configured to generate a first message. The transceiver unit is configured to: send the first message to a CU, where the first message indicates a cell that an IAB node expects to activate; and receive a second message, where the second message is used for activating the cell that the IAB node expects to activate.

In a possible implementation, the first message further indicates a cell that the IAB node expects to turn off; and the transceiver unit is further configured to receive a third message, where the second message is used for turning off the cell that the IAB node expects to turn off.

In a possible implementation, the processing unit is configured to send the first message to the CU through the transceiver unit when a cell identity conflict is detected.

For possible implementations of the communication apparatus in the eleventh aspect, refer to the possible implementations of the fifth aspect.

For technical effects brought by the possible implementations of the eleventh aspect, refer to descriptions of the technical effects of the fifth aspect or the possible implementations of the fifth aspect.

According to a twelfth aspect, an embodiment of this application provides another communication apparatus. The communication apparatus has a function of implementing behavior in the method embodiment in the sixth aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The transceiver unit is configured to receive a first message from a DU of an IAB node, where the first message indicates a cell that the IAB node expects to activate. The processing unit is configured to generate a second message. The transceiver unit is further configured to send the second message to the DU of the IAB node, where the second message is used for activating the cell that the IAB node expects to activate.

In a possible implementation, the first message further indicates a cell that the IAB node expects to turn off. The transceiver unit is further configured to: after receiving a handover complete message from a terminal device, send a third message to the DU of the IAB node, where the third message is used for turning off the cell that the IAB node expects to turn off, and the handover complete message indicates that the terminal device has been handed over to the cell that the IAB node expects to activate.

In a possible implementation, the transceiver unit is further configured to send a handover command to the terminal device, where the handover command is used for the terminal device to be handed over to the cell that the IAB node expects to activate.

For possible implementations of the communication apparatus in the twelfth aspect, refer to the possible implementations of the sixth aspect.

For technical effects brought by the possible implementations of the twelfth aspect, refer to descriptions of the technical effects of the possible implementations of the sixth aspect or the sixth aspect.

According to a thirteenth aspect, an embodiment of this application provides another communication apparatus. The communication apparatus includes a processor, the processor is coupled to a memory, the memory is configured to store a program or instructions, and when the program or the instructions are executed by the processor, the communication apparatus is enabled to perform the method according to any one of the first aspect to the sixth aspect.

In this embodiment of this application, in a process of performing the method, a process of sending information (or a signal) in the method may be understood as a process of outputting information according to instructions of the processor. When the information is output, the processor outputs the information to a transceiver, so that the transceiver transmits the information. After the information is output by the processor, other processing may need to be performed on the information, and then reaches the transceiver. Similarly, when the processor receives input information, the transceiver receives the information, and inputs the information into the processor. Further, after the transceiver receives the information, other processing may need to be performed on the information before the information is input into the processor.

An operation such as sending and/or receiving involved in the processor may be generally understood as an instruction output based on the processor if there is no special description, or if the operation does not conflict with an actual function or internal logic of the operation in related descriptions.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method according to the first aspect or any possible implementation of the first aspect.

In a possible implementation, the memory is located outside the communication apparatus. In a possible implementation, the memory is located inside the communication apparatus.

In a possible implementation, the processor and the memory may alternatively be integrated into one component, that is, the processor and the memory may alternatively be integrated together.

In a possible implementation, the communication apparatus further includes the transceiver. The transceiver is configured to: receive a signal, send a signal, or the like.

According to a fourteenth aspect, this application provides another communication apparatus. The communication apparatus includes a processing circuit and an interface circuit, the interface circuit is configured to obtain data or output data, and the processing circuit is configured to perform the method according to any one of the first aspect to the sixth aspect.

According to a fifteenth aspect, this application provides a computer-readable storage medium. The computer-readable storage medium stores a computer program, the computer program includes program instructions, and when the program instructions are executed, a computer is enabled to perform the method according to any one of the first aspect to the sixth aspect.

According to a sixteenth aspect, this application provides a computer program product. The computer program product includes a computer program, the computer program includes program instructions, and when the program instructions are executed, a computer is enabled to perform the method according to any one of the first aspect to the sixth aspect.

According to a seventeenth aspect, this application provides a communication system, including the communication apparatus according to any one of the seventh aspect or the possible implementations of the seventh aspect, the communication apparatus according to any one of the eighth aspect or the possible implementations of the eighth aspect, and the communication apparatus according to any one of the eighth aspect or the possible implementations of the eighth aspect.

According to an eighteenth aspect, this application provides a communication system, including the communication apparatus according to any one of the eleventh aspect or the possible implementations of the eleventh aspect, and the communication apparatus according to any one of the twelfth aspect or the possible implementations of the twelfth aspect.

According to a nineteenth aspect, this application provides a chip, including a processor and a communication interface. The processor reads, through the communication interface, instructions stored in a memory, to perform the method according to any one of the first aspect to the sixth aspect.

## BRIEF DESCRIPTION OF DRAWINGS

To describe the technical solutions in embodiments of this application or in the background more clearly, the following briefly describes the accompanying drawings used for describing embodiments of this application or the background.

FIG. 1 is a diagram of an architecture of a communication system to which an embodiment of this application is applied;
FIG. 2 shows an example of an IAB network including a plurality of UEs and a plurality of IAB nodes;
FIG. 3 is a diagram of an IAB network architecture;
FIG. 4 is a diagram of a control plane protocol architecture in an IAB network;
FIG. 5 is a diagram of a user plane protocol architecture in an IAB network;
FIG. 6 is a diagram of an IAB network architecture;
FIG. 7 is a diagram of partial migration;
FIG. 8 is a diagram of full migration;
FIG. 9 shows an example of a continuous partial migration (no DU migration) scenario;
FIG. 10 shows an example of a scenario of DU migration in continuous partial migration according to an embodiment of this application;
FIG. 11 is a diagram of a mobile IAB node;
FIG. 12 is an interaction flowchart of a method for migrating a DU in an IAB network according to an embodiment of this application;
FIG. 13 is an interaction flowchart of another method for migrating a DU in an IAB network according to an embodiment of this application;
FIG. 14 is an interaction flowchart of another method for migrating a DU in an IAB network according to an embodiment of this application;
FIG. 15 shows an example of continuous partial migration according to an embodiment of this application;
FIG. 16 shows an example of a status after completion of MT handover in an IAB network according to an embodiment of this application;
FIG. 17 is an interaction flowchart of another method for migrating a DU in an IAB network according to an embodiment of this application;
FIG. 18 is a flowchart of information exchange according to an embodiment of this application;
FIG. 19 is a flowchart of another information exchange method according to an embodiment of this application;
FIG. 20 is an interaction flowchart of a cell handover method according to an embodiment of this application;
FIG. 21 is a possible example block diagram of a communication apparatus in an embodiment of this application;
FIG. 22 is a simplified diagram of a structure of a terminal device according to this application; and
FIG. 23 is a diagram of a structure of a network device 2300 according to an embodiment of this application.

## DESCRIPTION OF EMBODIMENTS

Terms "first", "second", and the like in the specification, claims, and accompanying drawings of this application are merely used to distinguish between different objects, and are not used to describe a specific order. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. In addition, terms such as "include" and "have" and any other variants thereof are intended to cover a non-exclusive inclusion. For example, processes, methods, systems, products, devices, or the like that include a series of steps or units are not limited to listed steps or units, but instead, optionally further include steps, units, or the like that are not listed, or optionally further include other steps or units inherent to these processes, methods, products, devices, or the like.

"Embodiments" mentioned in the specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described in the specification may be combined with another embodiment.

Terms used in the following embodiments of this application are merely intended to describe specific embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more. In text descriptions of this application, the character "/" generally represents an "or" relationship between associated objects. The term "at least one" used in this application means one or more.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) based only on (or according to) A, and B may alternatively be determined (or generated) based on (or according to) A and/or other information.

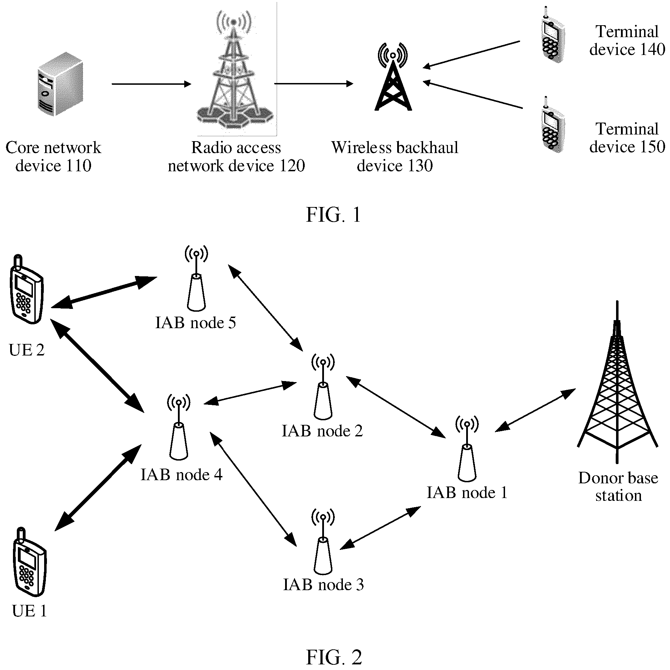

FIG. 1 is a diagram of an architecture of a communication system to which an embodiment of this application is applied. As shown in FIG. 1, the communication system includes a core network device 110, a radio access network device 120, a wireless backhaul device 130, and at least one terminal device (a terminal device 140 and a terminal device 150 are used as examples for description in FIG. 1). The terminal device is connected to the wireless backhaul device in a wireless manner, and is connected to the radio access network device through one or more wireless backhaul devices. In addition, some terminal devices may alternatively be directly connected to the radio access network device in the wireless manner. The radio access network device is connected to the core network device in the wireless manner or a wired manner. The core network device and the radio access network device may be different physical devices that are independent of each other, functions of the core network device and logical functions of the radio access network device may be integrated into a same physical device, or a part of functions of the core network device and a part of functions of the radio access network device may be integrated into one physical device. This is not limited in this application. The terminal device may be located at a fixed position, or may be mobile. It should be understood that the mobile communication system shown in FIG. 1 is merely a diagram. The communication system may further include another network device, for example, may further include a wireless relay device or a wireless backhaul device, which is not shown in FIG. 1. Quantities of core network devices, radio access network devices, wireless backhaul devices, and terminal devices included in the mobile communication system are not limited in embodiments of this application.

The radio access network device is an access device that is used by the terminal device to access the mobile communication system in the wireless manner. The radio access network device may be a base station NodeB, an evolved base station eNodeB, a base station in a 5G mobile communication system, a base station in a future mobile communication system, an access node in a Wi-Fi system, or the like. A specific technology used by the radio access network device and a specific device form of the radio access network device are not limited in embodiments of this application. The terminal device may also be referred to as a terminal (terminal), a UE, a mobile station (mobile station, MS), a mobile terminal (mobile terminal, MT), or the like.

The terminal device may be a mobile phone (mobile phone), a tablet computer (Pad), a computer having a wireless transceiver function, a virtual reality (virtual reality, VR) terminal device, an augmented reality (augmented reality, AR) terminal device, a cellular phone (cellular phone), a smartphone (smart phone), a wireless data card, a personal digital assistant (personal digital assistant, PDA), a wireless terminal in industrial control (industrial control), a wireless terminal in self driving (self driving), a wireless terminal in a telemedicine (remote surgery), a wireless terminal in a smart grid (smart grid), a wireless terminal in transportation safety (transportation safety), a wireless terminal in a smart city (smart city), a wireless terminal in a smart home (smart home), a machine type communication (machine type communication, MTC) terminal, a wearable device, a vehicle-mounted terminal device, an uncrewed aerial vehicle, or the like.

The wireless backhaul device may provide a backhaul service for a child node of the wireless backhaul device. Specifically, the child node may be a relay node in a long term evolution (long term evolution, LTE) system, an **IAB** node in a 5G system, or another device that can provide a wireless relay function. The radio access network device and the terminal device may be deployed on land, where the deployment includes indoor or outdoor, and handheld or vehicle-mounted deployment; may be deployed on water; or may be deployed on an airplane, a balloon, or an artificial satellite in air. Application scenarios of the radio access network device and the terminal device are not limited in embodiments of this application.

Communication between the radio access network device and the terminal device and communication between terminal devices may be performed by using a licensed spectrum (licensed spectrum), may be performed by using an unlicensed spectrum (unlicensed spectrum), or may be performed by using both a licensed spectrum and an unlicensed spectrum. The communication between the radio access network device and the terminal device and the communication between the terminal devices may be performed over a spectrum below 6 gigahertz (gigahertz, GHz), over a spectrum above 6 GHz, or over both a spectrum below 6 GHz and a spectrum above 6 GHz. Spectrum resources used by the radio access network device and the terminal device are not limited embodiments of this application.

The foregoing network elements may be network elements implemented on dedicated hardware, software instances running on the dedicated hardware, or instances of virtualization functions on an appropriate platform. In addition, embodiments of this application are also applicable to another future-oriented communication technology. Network architectures and service scenarios described in this application are intended to describe the technical solutions in this application more clearly, and do not constitute a limitation on the technical solutions provided in this application. A person of ordinary skill in the art may know that: With evolution of network architectures and emergence of new service scenarios, the technical solutions provided in this application are also applicable to similar technical problems.

For ease of understanding embodiments of this application, the following first briefly describes terms and technical features in embodiments of this application.

1. IAB network: Considering a small range of coverage of a high frequency band, to ensure network coverage performance, network coverage is provided in some remote areas, but optical fiber deployment is difficult and costly. Therefore, a flexible and convenient access and backhaul solution needs to be designed. An IAB technology emerges. A wireless transmission solution is used for both an access link (access link) and a backhaul link (backhaul link) of the IAB technology, so that optical fiber deployment is avoided and device costs are reduced.

In the IAB network, a relay node, or referred to as an IAB node (IAB node), may provide a wireless access service for a UE. Transmission of service data of the UE is performed by the IAB node connected to an IAB donor (IAB donor) node over a radio backhaul link. The IAB node may set up a radio backhaul link to one or more upstream nodes, and access a core network through the upstream node. The upstream node may control (for example, perform data scheduling, timing modulation, and power control on) the relay node by using a plurality of types of signaling. In addition, the relay node may set up an access link to one or more downstream nodes, and provide an access service for the one or more downstream nodes. The upstream node of the relay node may be a base station, or may be another relay node. The downstream node of the relay node may be a terminal, or may be another relay node. In some cases, an upstream node of an IAB node may also be referred to as an upstream node or a parent node of the IAB node, and a downstream node of the IAB node may also be referred to as a downstream node or a child node of the IAB node.

Multi-hop networking may be used in the IAB network. Considering a requirement for service transmission reliability, the IAB node may support dual connectivity (dual connectivity, DC) or multi-connectivity (multi-connectivity), to cope with a possible exception (for example, radio link outage or blockage (blockage) and load fluctuation) on the backhaul link, to enhance transmission reliability assurance. Therefore, the IAB network may support the multi-hop and multi-connection networking, and there may be a plurality of routing paths between a terminal device and a donor base station. On a path, there is a determined hierarchical relationship between IAB nodes and between an IAB node and a donor base station serving the IAB node. Each IAB node considers a node providing a backhaul service for the IAB node as a parent node. Correspondingly, each IAB node may be considered as a child node of the parent node.

It should be understood that both the radio link outage (outage) or the radio link blockage (blockage) may cause a radio link failure or radio link congestion. For example, when a building blocks a UE and an IAB donor node, the radio link blockage may be caused between the UE and the IAB donor node. In a conventional technology, a main reason of the radio link failure is that a physical layer indicates that a radio link is faulty for more than specific duration, random access fails, or radio link control (radio link control, RLC) fails. It should be understood that the radio link failure may be caused by another reason. This is not limited in embodiments of this application. The radio link congestion may mean that an amount of uplink or downlink buffered data to be communicated by an IAB node on a link exceeds a specific threshold.

The IAB node may include an MT part (namely, an IAB-node MT) and a DU part (namely, an IAB-node DU). When being oriented to the parent node of the IAB node, the IAB node may be considered as a terminal device accessing the parent node, that is, a role of an MT. When being oriented to the child node of the IAB node, the IAB node may be considered as a network device providing the backhaul service for the child node, that is, a role of a DU. The child node herein may be another IAB node or a terminal device.

The IAB donor node (IAB donor) may be an access network element having a complete base station function, for example, a donor base station DgNB, or may be an access network element in which a central unit (central unit, CU) and a DU are separated. The IAB donor node is connected to a core network (for example, connected to a 5G core network) network element that serves the terminal device, and provides a wireless backhaul function for the IAB node. For ease of description, the central unit of the IAB donor node may be referred to as a donor CU or an IAB-donor CU for short, and the distributed unit of the IAB donor node may be referred to as a donor DU or an IAB-donor DU for short. The donor CU may alternatively be in a form in which a control plane (control plane, CP) is separated from a user plane (user plane, UP). For example, the CU may include one CU-CP and one (or more) CU-UPs.

In the IAB network, one or more IAB nodes may be included on one transmission path between the UE and the IAB donor. Each IAB node needs to maintain a radio backhaul link oriented to a parent node and a radio link oriented to a child node. If the child node of the IAB node is a terminal device, there is the radio access link between the IAB node and the child node (namely, the terminal device). If the child node of the IAB node is the another IAB node, there is the radio backhaul link between the IAB node and the child node (namely, the another IAB node). FIG. 2 shows an example of an IAB network including a plurality of UEs and a plurality of IAB nodes. In FIG. 2, an example in which two UEs and five IAB nodes are included is used. The two UEs are respectively a UE 1 and a UE 2, and the five IAB nodes are respectively an IAB node 1 to an IAB node 5. It should be understood that, in FIG. 2, a thick line indicates an access link, and a thin line indicates a backhaul link. Refer to FIG. 2. In a path "UE 1→IAB node 4→IAB node 3→IAB node 1→IAB donor", the UE 1 accesses the IAB node 4 through a wireless access link, the IAB node 4 is connected to the IAB node 3 through a radio backhaul link, the IAB node 3 is connected to the IAB node 1 through a radio backhaul link, and the IAB node 1 is connected to the IAB donor through a radio backhaul link. It should be understood that an IAB networking scenario shown in FIG. 2 is merely an example, and there are more other possibilities in the IAB network that supports the multi-hop and multi-connection networking. This is not listed one by one herein.

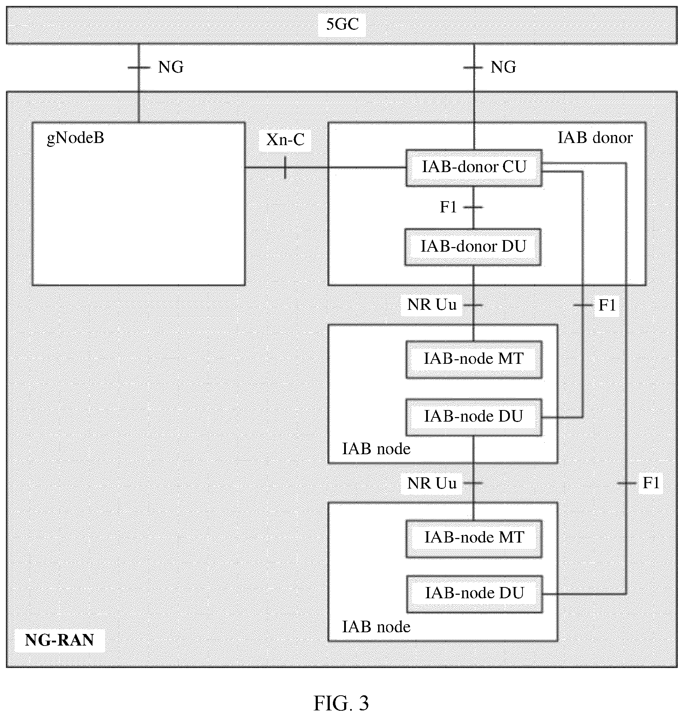

The IAB-node DU (briefly referred to as an IAB-DU in the following) is logically connected to the IAB-donor CU (briefly referred to as a CU in the following) through an F1 interface. FIG. 3 is a diagram of an IAB network architecture. An F1 connection in FIG. 3 is not a physical direct connection, but a logical connection. Actually, an F1 connection between an IAB-DU and a CU is physically implemented through an NR Uu interface between an IAB-node MT of each hop and a parent node DU. However, because the IAB-DU can finally communicate with the CU, it may be considered that there is an F1 interface logically. The F1 interface may also be referred to as an F1* interface. A name of the interface is not limited in embodiments of this application. In addition, for example, the interface is referred to as the F1 interface in this specification. The IAB-donor CU is connected to a 5G core network (5G core network, 5GC/5GCN) through an NG interface. There is an Xn-C interface between the IAB-donor CU and a gNodeB.

The F1 interface may support a user plane protocol (F1-U/F1*-U) and a control plane protocol (F1-C/F1*-C). The user plane protocol includes one or more of the following protocol layers: a general packet radio service (general packet radio service, GPRS) tunneling protocol user plane (GPRS tunnelling protocol user plane, GTP-U) protocol layer, a user datagram protocol (user datagram protocol, UDP) protocol layer, an internet protocol (internet protocol, IP) protocol layer, and the like. The control plane protocol includes one or more of the following protocol layers: an F1 application protocol (F1 application protocol, F1AP), a stream control transport protocol (stream control transport protocol, SCTP), an IP protocol layer, and the like. Through a control plane of the F1/F1* interface, interface management, IAB-DU management, UE context related configuration, and the like may be performed between an IAB node and an IAB donor. Through a user plane of the F1/F1* interface, functions such as user plane data transmission and downlink transmission status feedback may be performed between the IAB node and the IAB donor.

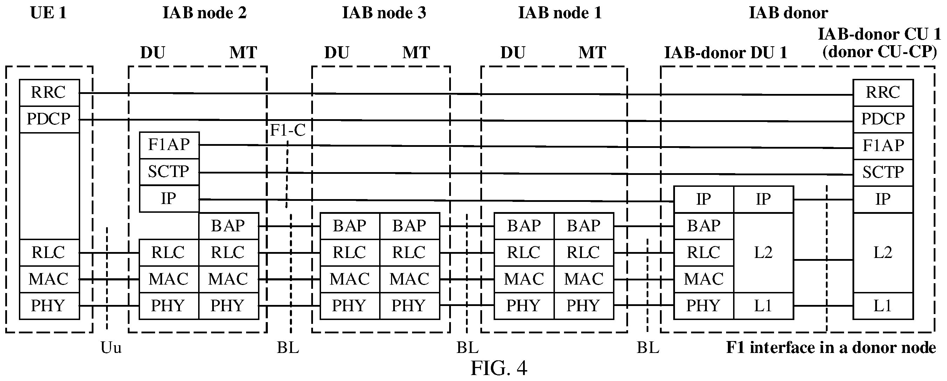

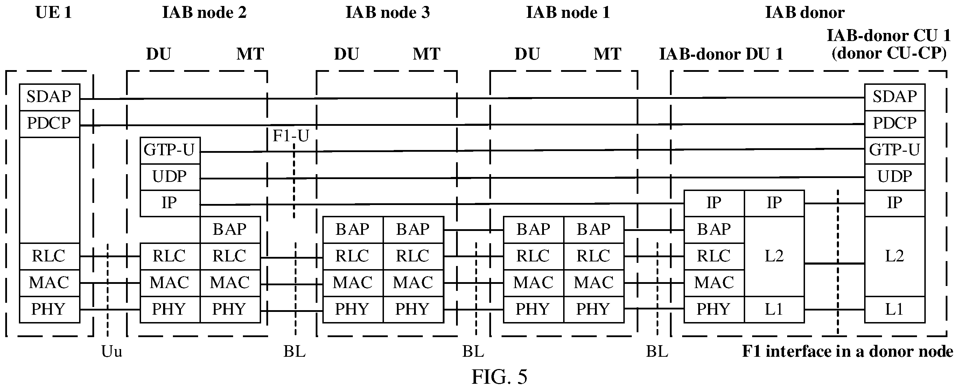

For example, refer to FIG. 4 and FIG. 5. FIG. 4 is a diagram of a control plane protocol architecture in an IAB network, and FIG. 5 is a diagram of a user plane protocol architecture in an IAB network.

For a control plane, as shown in FIG. 4, a Uu interface is set up between a UE 1 and an IAB 2-DU, and peer protocol layers include radio link control (radio link control, RLC) protocol layers, medium access control (medium access control, MAC) layers, and physical layers (physical layers, PHYs). An F1-C interface is set up between the IAB 2-DU and an IAB-donor CU 1, and peer protocol layers include F1AP layers and SCTP layers. An IAB-donor DU 1 and the IAB-donor CU 1 are connected in a wired manner, and peer protocol layers include internet protocol (internet protocol, IP) layers, L2s, and L1s. BLs are set up between an IAB node 2 and an IAB node 3, between the IAB node 3 and an IAB node 1, and between the IAB node 1 and the IAB-donor DU 1, and peer protocol layers include backhaul adaptation protocol (backhaul adaptation protocol, BAP) layers, RLC layers, MAC layers, and PHY layers. In addition, peer radio resource control (radio resource control, RRC) layers and peer packet data convergence protocol (packet data convergence protocol, PDCP) layers are set up between the UE 1 and the IAB-donor CU 1, and peer IP layers are set up between the IAB 2-DU and the IAB-donor DU 1.

It can be learned that, in comparison with a control plane protocol stack in a single air interface, in a control plane protocol stack in the IAB network, the DU of the accessing IAB node implements functions of a gNB-DU of the single air interface (to be specific, a function of setting up the peer RLC layers, the peer MAC layers, and the peer PHY layers with the UE and a function of setting up the peer F1AP layers and the peer SCTP layers with the CU). In other words, the DU of the accessing IAB node in the IAB network implements the functions of the gNB-DU of the single air interface, and the IAB-donor CU implements functions of a gNB-CU of the single air interface.

On the control plane, an RRC message is encapsulated in an F1AP message between the accessing IAB node and the IAB-donor CU for transmission. Specifically, in an uplink direction, the UE 1 encapsulates the RRC message in a PDCP protocol data unit (protocol data unit, PDU), and sends the PDCP protocol data unit to the IAB 2-DU after processing is sequentially performed at the RLC layer, the MAC layer, and the PHY layer. The IAB 2-DU obtains the PDCP PDU after processing is sequentially performed at the PHY layer, the MAC layer, and the RLC layer, encapsulates the PDCP PDU in an F1AP message, and obtains an IP packet after processing is sequentially performed at the SCTP layer and the IP layer. An IAB 2-MT sends the IP packet to an IAB 3-DU after processing is separately performed at the BAP layer, the RLC layer, the MAC layer, and the PHY layer. The IAB 3-DU obtains the IP packet after processing is sequentially performed at the PHY layer, the MAC layer, the RLC layer, and the BAP layer, and then an IAB 3-MT sends the IP packet to an IAB 1-DU by using an operation similar to that of the IAB 2-MT. Similarly, an IAB 1-MT sends the IP packet to the IAB-donor DU 1. After obtaining the IP packet through parsing, the IAB-donor DU 1 sends the IP packet to the IAB-donor CU 1. The IAB-donor CU 1 obtains the RRC message after processing is sequentially performed on the IP packet at the SCTP layer, the F1AP layer, and the PDCP layer. Operations in a downlink direction are similar. Details are not described herein again.

For a user plane, as shown in FIG. 5, a Uu interface is set up between a UE 1 and an IAB 2-DU, and peer protocol layers include RLC layers, MAC layers, and PHY layers. An F1-U interface is set up between the IAB 2-DU and an IAB-donor CU 1, and peer protocol layers include GTP-U layers and user datagram protocol (user datagram protocol, UDP) layers. An IAB-donor DU 1 and the IAB-donor CU 1 are connected in a wired manner, and peer protocol layers include IP layers, L2s, and L1s. BLs are set up between an IAB node 2 and an IAB node 3, between the IAB node 3 and an IAB node 1, and between the IAB node 1 and the IAB-donor DU 1, and peer protocol layers include BAP layers, RLC layers, MAC layers, and PHY layers. In addition, peer SDAP layers and peer PDCP layers are set up between the UE 1 and the IAB-donor CU 1, and peer IP layers are set up between the IAB 2-DU and the IAB-donor DU 1.

It can be learned that, in comparison with a user plane protocol stack in a single air interface, in a user plane protocol stack in the IAB network, a DU of an IAB accessing node implements some functions of a gNB-DU of the single air interface (to be specific, a function of setting up the peer RLC layers, the peer MAC layers, and the peer PHY layers with a terminal and a function of setting up the peer GTP-U layers and the peer UDP layers with the IAB-donor CU 1). It may be understood that the DU of the IAB accessing node implements the functions of the gNB-DU of the single air interface, and the IAB-donor CU implements functions of a gNB-CU of the single air interface.

On the user plane, a PDCP data packet is encapsulated in a GTP-U tunnel between the accessing IAB node and the IAB-donor CU for transmission. The GTP-U tunnel is set up on the F1-U interface.

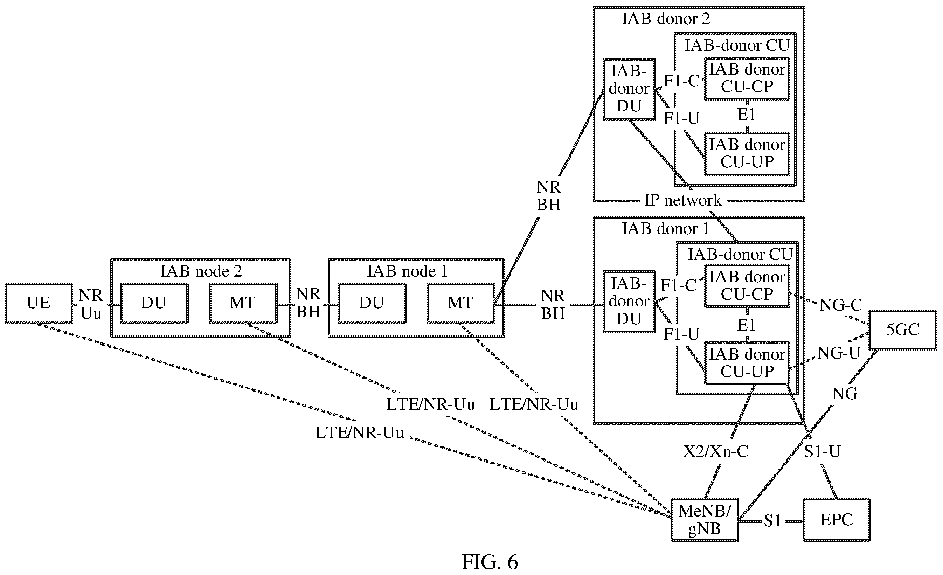

FIG. 6 is a diagram of an IAB network architecture, including a standalone (SA) IAB network and a non-standalone (NSA) IAB network. An IAB node includes an MT part and a DU part. In FIG. 6, an IAB node 1 and an IAB node 2 are used as an example for description. An IAB donor may be further divided into a DU part and a CU part, and a CU may be further divided into a CU-CP part and a CU-UP part. In FIG. 6, an IAB donor 1 and an IAB donor 2 are used as an example for description.

There is an F1 interface between a DU part of each IAB node and an IAB-donor CU. The F1 interface includes two parts: a control plane part and a user plane part. The user plane part is maintained between an IAB-DU and an IAB donor CU-UP, and the control plane part is maintained between the IAB-DU and an IAB donor CU-CP. An F1 interface between the IAB-DU and the IAB-donor CU is not shown in FIG. 6. A UE is connected to a DU of an IAB node through an NR Uu interface, and an MT and a DU in each IAB node are connected through an NR BH interface. The IAB donor CU-CP is connected to the IAB donor CU-UP through an E1 interface.

When the IAB node works in an SA mode, the IAB node may be connected to one parent node or dually connected to two parent nodes. The two parent nodes may be controlled by a same IAB donor or respectively controlled by different IAB donors. An F1 interface is set up between the DU part of the IAB node and an IAB donor, and the IAB donor may be connected to a 5G core network (5G core, 5GC), that is, a dashed line part in the figure. The IAB donor CU-CP is connected to a control plane network element (for example, an access and mobility management function AMF) in the 5GC through an NG control plane interface (NG-C), and the IAB donor CU-UP is connected to a user plane network element (for example, a user plane function UPF) in the 5GC through an NG user plane interface (NG-U).

When the IAB node works in an NSA mode (or an EN-DC mode), the IAB donor CU-UP may be connected to an EPC (for example, connected to a serving gateway (serving gateway, SGW)) through an S1 user plane interface, a MeNB is connected to an MT of the IAB node through an LTE Uu air interface, the MeNB is connected to the IAB donor CU-CP through an X2/Xn-C interface, and the MeNB is connected to the EPC through an S1 interface (including an S1 interface user plane and an S1 interface control plane). For example, the IAB donor CU-UP is connected to the EPC through the S1 interface user plane (S1-U).

In another possible case, the MeNB in FIG. 6 may alternatively be replaced with a 5G base station gNB, and the LTE Uu interface with a dashed line in FIG. 6 is correspondingly replaced with an NR Uu interface. The gNB may set up a user plane interface and/or a control plane interface with the 5GC. The gNB and the IAB donor provide a dual connectivity service for the IAB node. The gNB may serve as a role of a primary base station of the IAB node or a role of a secondary base station of the IAB node.

2. Partial migration (partial migration) and full migration (full migration)

In discussion of 3GPP Release 17 (Release-17), cross-CU migration of an IAB node is classified into two implementations: the full migration and the partial migration. The full migration further includes three implementations: gradual top-down (gradual top-down) migration, gradual bottom-up (gradual bottom-up) migration, and full nested (full nested) migration. In the partial migration, an MT of the IAB node is handed over across CUs, but a DU of the IAB node still maintains an F1 connection to a source CU. However, in the full migration, the DU of the IAB node needs to set up an F1 connection to a target CU. Rel-17 is mainly oriented to migration in the IAB node with an objective of load balancing. Therefore, the partial migration may be used, and only MT handover is performed, so that an F1 interface is switched to another path for transmission, but an anchor of the F1 interface is not changed. However, Rel-18 is mainly oriented to migration caused by movement of the IAB node. When a movement range of the IAB node is large, it is inappropriate to still maintain the F1 connection to the source CU, and the anchor of the F1 connection also needs to be changed to the target CU. Therefore, the full migration is a mandatory feature of mobile IAB in Rel-18. The following briefly describes a current discussion status of the partial migration and the full migration.

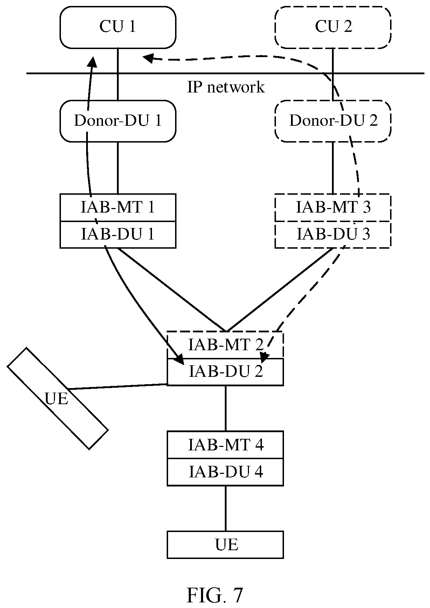

An IAB node in which migration is performed is referred to as a boundary node (boundary node). FIG. 7 is a diagram of partial migration. Refer to FIG. 7. An IAB node 2 is a boundary node. Before partial migration is performed in the IAB node 2, there is an RRC connection between an IAB-MT 2 and a CU 1, and there is an F1 interface between an IAB-DU 2 and the CU 1. The IAB node 2 communicates with an IAB donor through a source path (passing through an IAB node 1 including an IAB-MT 1 and an IAB-DU 1). Refer to a solid line with arrows. During the partial migration in the IAB node 2, the IAB-MT 2 performs cross-CU cell handover, and sets up an RRC connection to a CU 2. However, to avoid introducing an F1 interface re-setup process, the IAB-DU 2 still maintains the F1 interface with the CU 1, and an F1 interface is not set up between the IAB-DU 2 and the CU 2. Therefore, a communication path between the CU 1 and the IAB-DU 2 becomes cross-topology: CU 1↔Donor-DU 2↔IAB-MT 3↔IAB-DU 3↔IAB-MT 2↔IAB-DU 2, as shown in a dashed line with arrows. In FIG. 7, the CU 1 and the CU 2 are respectively referred to as an F1-terminating CU and a non-F1-terminating CU. It should be noted that data does not pass through the CU 2 when transmission of the data is performed on the path, and the CU 1 and the donor-DU 2 directly communicate with each other through an IP network. In the partial migration, core interaction signaling is an Xn message: an IAB TRANSPORT MANAGEMENT REQUEST/RESPONSE message between the CU 1 and the CU 2. For details, refer to the standard TS 38.423 V17.2.0 Section 9.4.2, Section 9.4.3. The CU 1 requests, by using the IAB TRANSPORT MANAGEMENT REQUEST message, the CU 2 to help the CU 1 set up cross-topology transmission of traffic, where the IAB TRANSPORT MANAGEMENT REQUEST message carries an IP address and quality of service (quality of service, QoS) information of the traffic. After setting up the cross-topology transmission of the traffic, the CU 2 returns, to the CU 1, backhaul (backhaul) link information (a backhaul link is in a topology in a dashed box under the CU 2) of the MT of the boundary node by using the IAB TRANSPORT MANAGEMENT RESPONSE message, and the CU 1 configures a cross-topology BAP rule for the boundary node by using an F1AP based on the backhaul information of the MT of the boundary node. An IAB TRANSPORT MANAGEMENT REQUEST/RESPONSE is an Xn message associated (associated) by a UE, and is associated with (associated to) the MT of the boundary node. Therefore, both the two messages need to carry an XnAP ID of the MT of the boundary node under the CU 1 and an XnAP ID of the MT of the boundary node under the CU 2, and the XnAP IDs identify the MT.

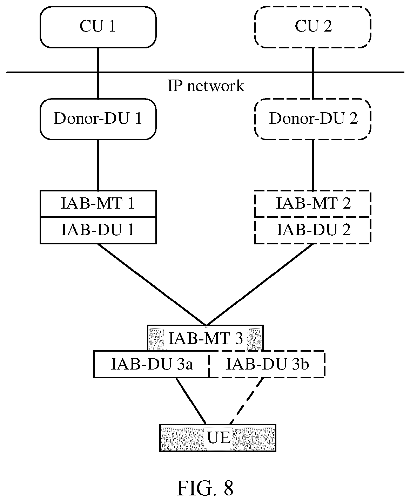

FIG. 8 is a diagram of full migration. Refer to FIG. 8. An IAB node 3 is a boundary node. In the full migration, an F1 interface between an IAB-DU 3 and a CU 1 needs to be migrated to a CU 2. Because a protocol does not support coexistence of F1 interfaces between one DU and two CUs, in an existing implementation solution, the IAB-DU 3 is extended to two logical DUs, namely, an IAB-DU 3a (which may be referred to as a DU 3a for short) and an IAB-DU 3b (namely, a new logical DU). The IAB-DU 3a always maintains an F1 interface with the CU 1, and the IAB-DU 3b (which may be referred to as a DU 3b for short) is configured to set up a new F1 interface with the CU 2. The DU 3a and the DU 3b may be considered as two DUs, and each have one F1 interface. A UE needs to perform one time of handover from a cell served by the IAB-DU 3a to a cell served by the IAB-DU 3b. In the three implementations of the full migration:

First several steps of the gradual top-down migration are similar to those of the partial migration. First, an IAB-MT 3 (which may be referred to as an MT 3 for short) is handed over based on a partial migration process, and a cross-topology F1-C and a cross-topology F1-U between the DU 3a and the CU 1 are set up. When the CU 2 helps set up the cross-topology F1-C and the cross-topology F1-U between the DU 3a and the CU 1, the CU 2 also sets up an F1-C and an F1-U between the DU 3b and the CU 2, and then hands over the UE to the DU 3b. The UE may directly communicate with the CU 2 on a target path (target path). The target path refers to CU 2↔Donor-DU 2↔IAB-MT 2↔IAB-DU 2↔IAB-MT 3↔IAB-DU 3b↔UE.

In the gradual bottom-up migration, a cross-topology F1-C and a cross-topology F1-U between the DU 3b and the CU 2 are first set up, so that the UE can be handed over to the DU 3b, and control plane and user plane data transmission between the DU 3b and the CU 2 through a topology 1 is set up. After all UEs are successfully handed over, a handover command is sent to an MT 3 or a handover command of an MT 3 is validated, and then the F1-C/U is set up on a target path, so that traffic of the UE can be migrated to the target path. The topology 1 refers to CU 2↔Donor-DU 1↔IAB-MT 1↔IAB-DU 1↔IAB-MT 3↔IAB-DU 3b. To set up the control plane and user plane data transmission between the DU 3b and the CU 2 through the topology 1, backhaul link resources (BH RLC CH) need to be set up on the DU 3b and a donor-DU 1, and an intermediate hop node (if any) between the DU 3b and the donor-DU 1, and a BAP layer needs to be configured. In this way, these related nodes can have corresponding resources for transmission of control plane and user plane data, and a BAP layer of each related node knows how to map a data packet to a resource.

A case of the full nested migration is similar to that of the gradual bottom-up migration. First, a cross-topology F1-C between the DU 3b and the CU 2 is set up (only the cross-topology F1-C is set up, so that the CU 2 is allowed to hand over the UE to the DU 3b when the CU 2 makes a handover decision, but a cross-topology F1-U is not set up, and cross-topology data transmission is not performed), so that the UE can be allowed to be handed over to the DU 3b. After a handover command is sent to all UEs, a handover command is immediately sent to an MT 3 or a handover command of an MT 3 is validated. Then, the F1-C/U is directly set up on a target path, so that traffic of the UE can be migrated to the target path.

3. DU migration in continuous partial migration

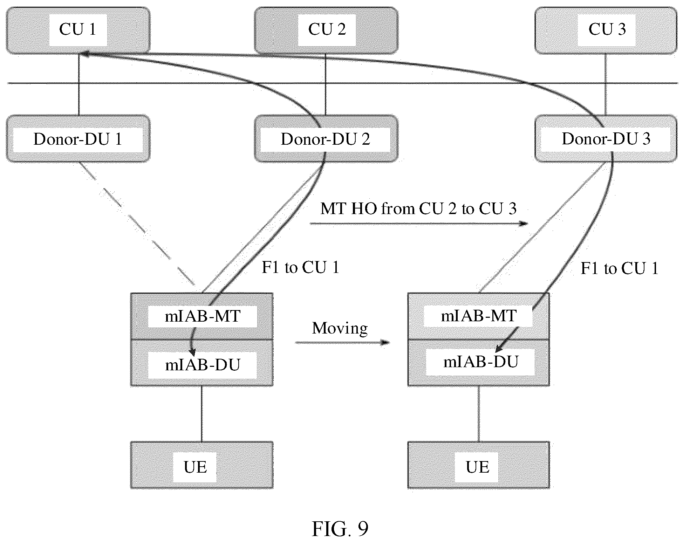

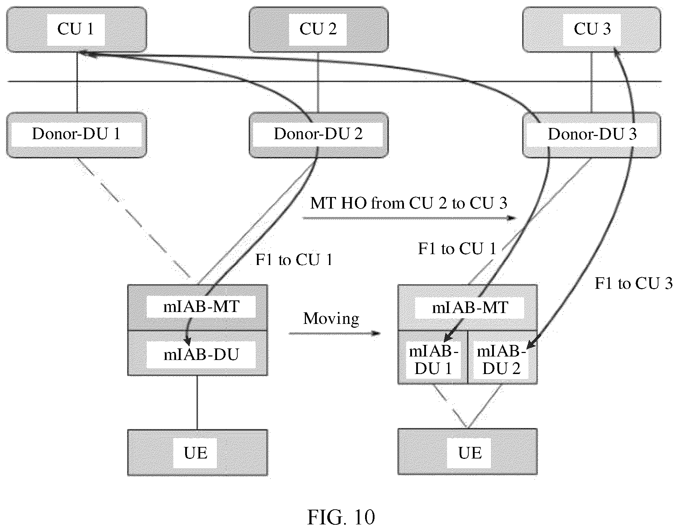

An essential difference between full migration and partial migration lies in whether the DU migration needs to be performed (actually, a new logical DU is generated and then an F1 interface is set up with a target (target) CU, which may also be usually described as the "DU migration" from a macro perspective of an IAB node). In a Rel-18 mobile IAB project initiation document, the full migration is a mandatory feature. However, this does not mean that the full migration needs to be performed for each time of migration in the IAB node. In discussion in previous several meetings of Rel-18, a mainstream view is to use the continuous partial migration as a baseline, and perform DU migration when the DU migration needs to be performed. FIG. 9 shows an example of a continuous partial migration (no DU migration) scenario. As shown in FIG. 9, an mIAB (mobile IAB)-MT is handed over from a topology under a CU 1 to a topology under a CU 2, and then is handed over from the topology under the CU 2 to a topology under a CU 3. The mIAB-DU always maintains an F1 connection to the CU 1. According to a conclusion of an RAN3 #117b e-meeting, a CU (namely, the CU 1) of an F1 anchor of an mIAB-DU determines whether DU migration needs to be performed. FIG. 10 shows an example of a scenario of DU migration in continuous partial migration according to an embodiment of this application. FIG. 10 shows a case in which a CU 1 determines to perform DU migration when an mIAB-MT is migrated from a topology under a CU 2 to a topology under a CU 3. Similar to the full migration, an mIAB-node needs to generate a new logical DU (mIAB-DU 2), set up an F1 interface with the CU 3, and then hand over a UE from a cell served by an mIAB-DU 1 to a cell served by an mIAB-DU 2. In FIG. 9 and FIG. 10, the mIAB-MT is directly connected to a donor-DU, but this is merely an example. The mIAB-MT may alternatively be connected to another fixed IAB-DU, and reach the donor-DU through a plurality of hops. This is not limited in embodiments of this application.

4. Cell identity: The cell identity may be indicated by using a PCI or a cell global identifier (cell global identifier, CGI), and is an important parameter of a cell. Each cell corresponds to one cell identity, used for distinguishing between different cells. Downlink signal synchronization, signal demodulation, and signal switching may be performed based on the cell identity. An example in which the cell identity is the PCI is used for a detailed description herein. There are 1008 PCIs in 5G. The 10008 PCIs are divided into 336 groups, and each group includes three PCIs, as shown in the following:

$$N_{ID}^{cell} = 3N_{ID}^{(1)} + N_{ID}^{(2)}, \text{where } N_{ID}^{(1)} = \{0 \sim 335\}\ N_{ID}^{(2)} = \{0, 1, 2\}$$

Refer to Table 1. Main differences between a 5G PCI and an LTE PCI are as follows:

Table 1

| Sequence | LTE | 5G NR | Difference and impact |
|---|---|---|---|
| Synchronization signal | A primary synchronization signal is related to a PCI mod 3 and is designed and constructed based on a ZC sequence, where a sequence length is 62. | A primary synchronization signal is related to a PCI mode 3 and is designed and constructed based on an m sequence, where a sequence length is 127. | The LTE requires that PCIs mod 3 of neighboring cells be different to avoid access failures.<br>The 5G requires that PCIs mode 3 of neighboring cells be different or the same, which has little impact on a synchronization delay and does not affect user experience. |
| Uplink reference signal | A DMRS for a PUCCH/PUSCH and an SRS are based on the ZC sequence, where the ZC sequence has 30 groups of roots, and the roots are associated with PCIs. | A DMRS for a PUSCH/PUCCH and an SRS are based on a ZC sequence, where the ZC sequence has 30 groups of roots, and the roots are associated with PCIs. | Same as that in the LTE, PCIs mod 30 of the neighboring cells need to be different in the 5G. |
| Downlink reference signal | A CRS resource location is determined by the PCI mod 3. | A resource location of a DMRS for an SS BLOCK is determined by a PCI mod 4. | There is no CRS in 5G.<br>The DMRS for the SS BLOCK is added in 5G, where DMRS frequency domain positions may be staggered when PCIs mod 4 are different, a pilot is still interfered by an SSB but performance is not affected, and the PCIs mod 4 do not need to be different for the neighboring cells. |

PCI planning mainly complies with the following principles:

(a) A same PCI cannot be allocated to the neighboring cells. If the same PCI is allocated to the neighboring cells, a UE cannot detect the neighboring cells in an overlapping coverage area, affecting handover and camping.

(b) If serving cells have a same frequency, the same PCI cannot be allocated to the neighboring cells. If the same PCI is allocated to the neighboring cells, a source base station cannot determine a target handover cell based on the PCI when the UE reports the PCI of the neighboring cell to a base station of a source cell.

A 3GPP PUSCH DMRS-based ZC sequence group number is related to the PCI mod 30. For a PUCCH demodulation reference signal (demodulation reference signal, DMRS) and a channel sounding reference signal (sounding reference signal, SRS), an algorithm uses the PCI mode 30 as a higher layer configuration ID to select a sequence group. Therefore, the PCIs mode 30 of the neighboring cells should be different to ensure correct demodulation of an uplink signal.

In an IAB network, the cell identity may be configured by using operation, administration, and maintenance, (operation, administration, and maintenance, OAM), or after an F1 interface is set up between an IAB node and a CU, the IAB node reports a configured cell identity to the CU, or the CU reconfigures a cell identity based on the cell identity reported by the IAB node and other information. Details are not described herein. In conclusion, the cell identity is preconfigured.

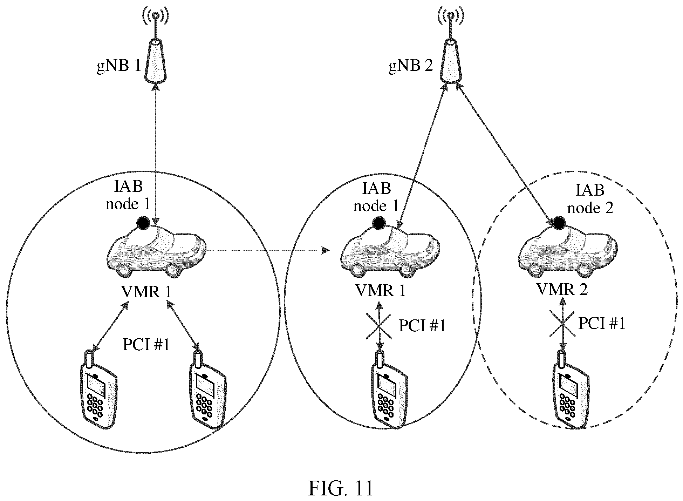

In R16/17, an IAB node is fixedly disposed in a position, in other words, is statically deployed. In R18, the IAB node may be installed on a vehicle and move with the vehicle, as shown in FIG. 11. FIG. 11 is a diagram of a mobile IAB node. For example, a vehicle VMR 1 receives a service from a gNB 1, an IAB node 1 is carried on the vehicle VMR 1, and a cell identity configured under the IAB node 1 is a PCI #1. During movement, the VMR 1 moves to a gNB 2 to receive a service, and the gNB 2 further provides a service for a vehicle VMR 2. If a cell identity PCI #1 is also configured under an IAB node 2 carried on the VMR 2, the two cell identitys are the same. As a result, a cell collision occurs, so that communication quality is affected. It can be learned that an existing static PCI configuration method is no longer applicable. For a mobile IAB scenario in R18, if a static PCI is used, a conflict with a PCI of a neighboring cell may occur during movement of an IAB cell. Therefore, a new cell identity configuration method is urgently needed to avoid a signal collision.

Based on the foregoing descriptions, an existing meeting conclusion only provides that in the continuous partial migration, a first CU (that is, a source CU of a boundary node) determines whether to perform DU migration. However, on what basis does the first CU determine whether to perform DU migration? No specific solution is provided in the meeting conclusion. The meeting conclusion also does not provide a solution of how to perform DU migration in the continuous partial migration and when the first CU determines whether to perform DU migration. The DU migration solution in the IAB network provided in embodiments of this application can resolve the foregoing three problems, and is a complete solution for implementing the DU migration in the continuous partial migration.

The following describes the DU migration solution in the IAB network provided in embodiments of this application with reference to the accompanying drawings.

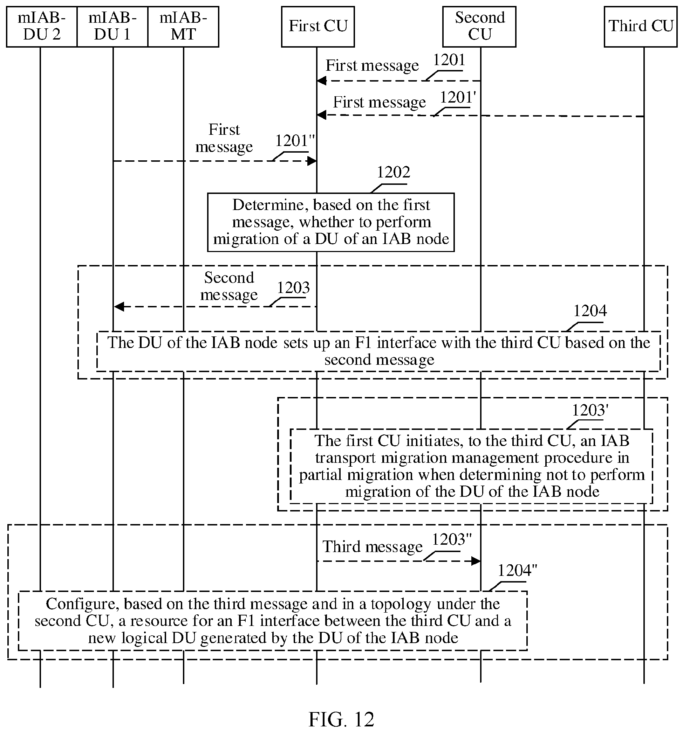

FIG. 12 is an interaction flowchart of a method for migrating a DU in an IAB network according to an embodiment of this application. The method in FIG. 12 is applicable to a scenario of DU migration in continuous partial migration. In FIG. 12, an mIAB-MT represents an MT of an IAB node, an mIAB-DU 1 represents a DU of the IAB node, and an mIAB-DU 2 represents a new logical DU of the IAB node. For meanings of network elements in other subsequent figures, refer to the meanings in FIG. 12. As shown in FIG. 12, the method includes the following steps.

1201: A second CU sends a first message to a first CU.

Correspondingly, the first CU receives the first message from the second CU. The first message includes an ID that identifies the MT of the IAB node in a third CU, and an ID of the third CU. For example, the ID that identifies the MT of the IAB node in the third CU may be an XnAP ID of the IAB node under the third CU. Alternatively, the first message includes an IP address of the third CU or an IP address of a donor DU managed by the third CU, and the ID that identifies the MT of the IAB node in the third CU. The first message may be an Xn message. For example, the first message may be referred to as a DU migration query message. In a possible implementation, a trigger condition for the second CU to send the first message to the first CU is that the second CU receives the following messages sent by the third CU: (1) a HANDOVER REQUEST ACKNOWLEDGE about the MT (indicating that the MT is to be handed over), (2) a UE CONTEXT RELEASE about the MT (indicating that the MT has completed the handover from the second CU to the third CU), or (3) a RETRIEVE UE CONTEXT REQUEST about the MT (the MT has completed recovery from a radio link failure). That the MT has completed recovery (recovery) from a radio link failure (radio link failure) may be that the radio link failure occurs between the MT and the second CU and the MT accesses a topology under the third CU. For the HANDOVER REQUEST ACKNOWLEDGE, refer to the standard TS 38.423 V17.2.0 Section 9.1.1.2. For the UE CONTEXT RELEASE, refer to the standard TS 38.423 V17.2.0 Section 9.1.1.5. For the RETRIEVE UE CONTEXT REQUEST, refer to the standard TS 38.423 V17.2.0 Section 9.1.1.8.

In other words, the trigger condition for the second CU to send the first message to the first CU is receiving an eighth message from the third CU. The eighth message indicates any one of the following: The MT of the IAB node is to be handed over to the topology under the third CU, the MT has been handed over to the topology under the third CU, or the MT has accessed the topology under the third CU after the radio link failure occurs between the MT and the second CU. For example, the eighth message is the HANDOVER REQUEST ACKNOWLEDGE about the MT, the UE CONTEXT RELEASE about the MT, or the RETRIEVE UE CONTEXT REQUEST about the MT.

If there is an RRC connection between the MT and the second CU, it indicates that the MT is handed over to a topology under the second CU and is not handed over to the topology under the third CU. For example, the MT is handed over from a topology under the first CU to the topology under the second CU, and the IAB node maintains an F1 connection to the first CU. In this case, there is the RRC connection between the MT and the second CU. Alternatively, the topology under the third CU is a topology to which the MT changes from the topology under the second CU. For example, the MT is handed over from the topology under the first CU to the topology under the second CU, and then is handed over from the topology under the second CU to the topology under the third CU. In this case, the topology under the third CU is the topology to which the MT changes from the topology under the second CU. For another example, the MT is handed over from the topology under the first CU to the topology under the second CU, and an RLF occurs between the MT and the second CU. Then, the MT performs an RLF recovery procedure, and re-accesses the topology under the third CU. In this case, the topology under the third CU is the topology to which the MT changes from the topology under the second CU.

1201': A third CU sends a first message to a first CU.

Correspondingly, the first CU receives the first message from the third CU. The first message in step 1201' may be the same as the first message in step 1201. The first message may be an Xn message. For example, the first message may be referred to as a DU migration query message. In a possible implementation, a trigger condition for the third CU to send the first message to the first CU is that: (1) The third CU sends a HANDOVER REQUEST ACKNOWLEDGE about the MT to a second CU; (2) the third CU sends a UE CONTEXT RELEASE to a second CU; or (3) the third CU receives a RETRIEVE UE CONTEXT RESPONSE about the MT sent by a second CU. Because this is the Xn message between the third CU and the first CU, the Xn message needs to carry XnAP IDs of the MT under the first CU and the third CU. In other words, the trigger condition for the third CU to send the first message to the first CU is sending a ninth message to the second CU or receiving a tenth message from the second CU. The ninth message indicates that the MT is to be handed over to a topology under the third CU or the MT has changed to a topology under the third CU. For example, the ninth message is the HANDOVER REQUEST ACKNOWLEDGE about the MT, the UE CONTEXT RELEASE about the MT, or a RETRIEVE UE CONTEXT REQUEST about the MT. The tenth message indicates that the MT has changed to the topology under the third CU. For example, the tenth message is the RETRIEVE UE CONTEXT RESPONSE.

1201": The DU of the IAB node sends a first message to a first CU.

Correspondingly, the first CU receives the first message from the DU of the IAB node. The first message in step 1201" may be an F1 message, for example, a gNB-DU configuration update message carrying an ID that identifies the MT of the IAB node in a third CU, and an ID of the third CU. In other words, an existing gNB-DU configuration update message may be reused, as the first message, to carry the ID that identifies the MT of the IAB node in the third CU, and the ID of the third CU. A trigger condition for the DU of the IAB node to send the first message to the first CU may be that the MT of the IAB node is handed over from a topology under a second CU to a topology under the third CU.

Step 1201, step 1201', and step 1201" are three possible implementations. The first CU may receive the first message from the second CU, may receive the first message from the third CU, or may receive the first message from the DU of the IAB node. It should be understood that the method procedure in FIG. 12 includes any one of step 1201, step 1201', or step 1201". This is not limited in this embodiment of this application. The first message may be considered as a condition for triggering the first CU to determine whether to migrate the DU of the IAB node. In a possible implementation, the first message indicates any one of the following: The MT is to be handed over from the topology under the second CU to the topology under the third CU, the MT has completed the handover from the topology under the second CU to the topology under the third CU, or the radio link failure occurs between the MT and the second CU and the MT accesses the topology under the third CU. For example, the first message includes the ID of the third CU and the XnAP ID of the IAB node under the third CU. For another example, the first message includes the IP address of the third CU and the XnAP ID of the IAB node under the third CU. For another example, the first message includes the IP address of the donor DU managed by the third CU and the XnAP ID of the IAB node under the third CU. For another example, the first message includes the ID of the third CU, the IP address of the third CU, and the XnAP ID of the IAB node under the third CU. For another example, the first message includes the ID of the third CU, the IP address of the donor DU managed by the third CU, and the XnAP ID of the IAB node under the third CU. For another example, the first message includes the IP address of the third CU, the IP address of the donor DU managed by the third CU, and the XnAP ID of the IAB node under the third CU. For another example, the first message includes the ID of the third CU, the IP address of the third CU, the IP address of the donor DU managed by the third CU, and the XnAP ID of the IAB node under the third CU. The first CU receives the first message, and may learn of any one of the following: The MT is to be handed over from the topology under the second CU to the topology under the third CU, the MT has completed the handover from the topology under the second CU to the topology under the third CU, or the radio link failure occurs between the MT and the second CU and the MT accesses the topology under the third CU. In this implementation, the first CU may be triggered in time to determine whether to migrate the DU of the IAB node.

1202: The first CU determines, based on the first message, whether to perform migration of the DU of the IAB node.

The determining whether to perform migration of the DU of the IAB node may be written as: determining whether to migrate the DU of the IAB node. A possible implementation of step 1202 is as follows: determining, based on the first message, whether the first CU can reach, without using a core network, the third CU or the donor DU managed by the third CU, in other words, determining, based on the first message, whether the first CU can reach, through an IP network that does not include the core network, the third CU or the donor DU managed by the third CU. A manner of determining, based on the first message, whether the first CU can reach, without using the core network, the third CU or the donor DU managed by the third CU is not limited in this embodiment of this application. For example, a network management system configures, for the first CU, a table of network nodes that can be directly reached without using the core network, and the CU queries the table to determine whether the third CU or the donor DU managed by the third CU can be reached without using the core network.

A possible implementation of step 1202 is as follows: determining, based on the first message, whether the first CU can set up an Xn interface with the third CU. A manner of determining, based on the first message, whether the first CU can set up the Xn interface with the third CU is not limited in this embodiment of this application. For example, the first CU attempts to initiate an Xn interface setup request to the third CU. If the first CU obtains a response indicating that setup of the Xn interface is allowed, the first CU considers that the Xn interface can be set up with the third CU; or if the first CU does not obtain a response indicating that setup of the Xn interface is allowed, the first CU considers that the setup of the Xn interface with the third CU is not allowed.

A possible implementation of step 1202 is as follows: determining, based on the first message, whether the first CU can reach, through IP routing, the third CU or the donor DU managed by the third CU, in other words, determining, based on the first message, whether the first CU and the third CU or the donor DU managed by the third CU are IP-routable (IP routable). A manner of determining, based on the first message, whether the first CU can reach, through the IP routing, the third CU or the donor DU managed by the third CU is not limited in this embodiment of this application. For example, the first CU queries an IP routing table. If there is an entry related to the third CU or the donor DU managed by the third CU in the IP routing table (for example, a next-hop IP address can be obtained through query based on the IP address of the third CU or the donor-DU managed by the third CU), it is considered that an IP is routable; or if there is no entry related to the third CU or the donor-DU managed by the third CU in the IP routing table, an IP is unroutable.

1203: The first CU sends a second message to the DU of the IAB node when determining to perform migration of the DU of the IAB node.

Correspondingly, the DU of the IAB node receives the second message from the first CU. The second message indicates the DU of the IAB node to set up an F1 interface with the third CU. For example, the second message indicates the IAB node or the DU of the IAB node to generate a new logical DU, and set up the F1 interface with the third CU through the new logical DU, that is, set up the F1 interface between the new logical DU and the third CU. The second message may be referred to as a DU migration command (migration command).

1204: The DU of the IAB node sets up the F1 interface with the third CU based on the second message.

The second message may include the ID of the third CU. A possible implementation of step 1204 is as follows: The DU of the IAB node generates the new logical DU based on the second message, and sets up the F1 interface with the third CU through the new logical DU. For example, after the DU of the IAB node generates the new logical DU, the new logical DU initiates an F1 setup request message (F1 SETUP REQUEST) to the third CU based on the ID of the third CU carried in the second message.

Step 1203 and step 1204 are optional. Step 1203 and step 1204 may be replaced with the following step 1203', or may be replaced with step 1203" and step 1204". It should be understood that the method procedure in FIG. 12 includes any one of step 1203 and step 1204, step 1203', or step 1203" and step 1204". This is not limited in this embodiment of this application.

1203': The first CU initiates, to the third CU, an IAB transport migration management procedure in partial migration when determining not to perform migration of the DU of the IAB node.

Step 1203' is optional. The IAB transport migration management (IAB TRANSPORT MIGRATION MANAGEMENT) procedure is used for cross-topology migration of traffic. For the IAB TRANSPORT MIGRATION MANAGEMENT procedure, refer to the standard TS 38.423 V17.2.0 Section 9.4.2, Section 9.4.3.

An objective of step 1203' is to implement the partial migration. In a possible implementation, the IAB transport migration management procedure in the partial migration initiated by the first CU to the third CU is an IAB transport migration management procedure in the standard. In a possible implementation, in comparison with the IAB transport migration management procedure in the standard, in the IAB transport migration management procedure in the partial migration initiated by the first CU to the third CU, a key information element in an IAB TRANSPORT MIGRATION MANAGEMENT REQUEST/RESPONSE message on the Xn interface is transferred in a new message (namely, a sixth message and a seventh message below) on an NG interface. The following describes this implementation in detail. For example, the first CU sends the sixth message to an access and mobility management function network element (for example, an AMF), where the sixth message includes an IP address of the traffic of the IAB node under the third CU and QoS information of the traffic of the IAB node; and the first CU receives the seventh message from the access and mobility management function network element, where the seventh message includes backhaul (backhaul) link information under the third CU, and DSCP or flow label (Flow Label) information of the traffic of the IAB node. For the backhaul (backhaul) link information, refer to the standard TS 38.423 V17.2.0 Section 9.2.2.83.

1203": The first CU sends a third message to the second CU when determining to perform migration of the DU of the IAB node.

The third message is used for requesting the second CU to configure, in the topology under the second CU, a resource for the F1 interface between the third CU and the new logical DU generated by the DU of the IAB node. The third message may be further used for requesting the second CU not to migrate the MT of the IAB node temporarily. For example, the third message is used for requesting the second CU not to migrate the MT of the IAB node temporarily, and configure the resource for the F1 interface between the third CU and the new logical DU generated by the DU of the IAB node. The F1 interface is a cross-topology F1 interface that passes through the topology (donor-DU 2) of the second CU and terminates on the third CU. The third message carries the XnAP ID of the MT under the first CU. Optionally, the third message further carries a gNB ID of the third CU. The gNB ID of the third CU is optional because the first CU may not necessarily need to know a CU for which the F1 interface is set up, and only needs to configure, in a topology under the CU, a resource serving the F1 interface. The third message may be an Xn message. The third message may be referred to as an Other node F1 setup request, indicating that the F1 interface is not set up on the second CU, but is set up for another node. It should be noted that names of the messages are not limited in this embodiment of this application.

1204": The second CU configures, based on the third message and in the topology under the second CU, the resource for the F1 interface between the third CU and the new logical DU generated by the DU of the IAB node.

Step 1203" and step 1204" are optional.

In this embodiment of this application, after receiving the first message, the first CU determines, based on the first message, whether to perform migration of the DU of the IAB node. That the first CU receives the first message is a trigger condition for the first CU to determine whether to migrate the DU of the IAB node. Therefore, the trigger condition for the first CU to determine whether to migrate the DU of the IAB node is provided. The first CU determines, based on the first message, whether to perform migration of the DU of the IAB node. It can be learned that this embodiment of this application further provides a basis for the first CU to determine whether to migrate the DU of the IAB node. Sending the second message to the IAB node when determining to perform migration of the DU of the IAB node is a DU migration manner provided in this embodiment of this application. The solution in embodiments of this application may support the DU migration triggered by a topology change of the MT, and resolves a problem in which DU migration in a continuous partial migration process is not supported in a conventional technology.

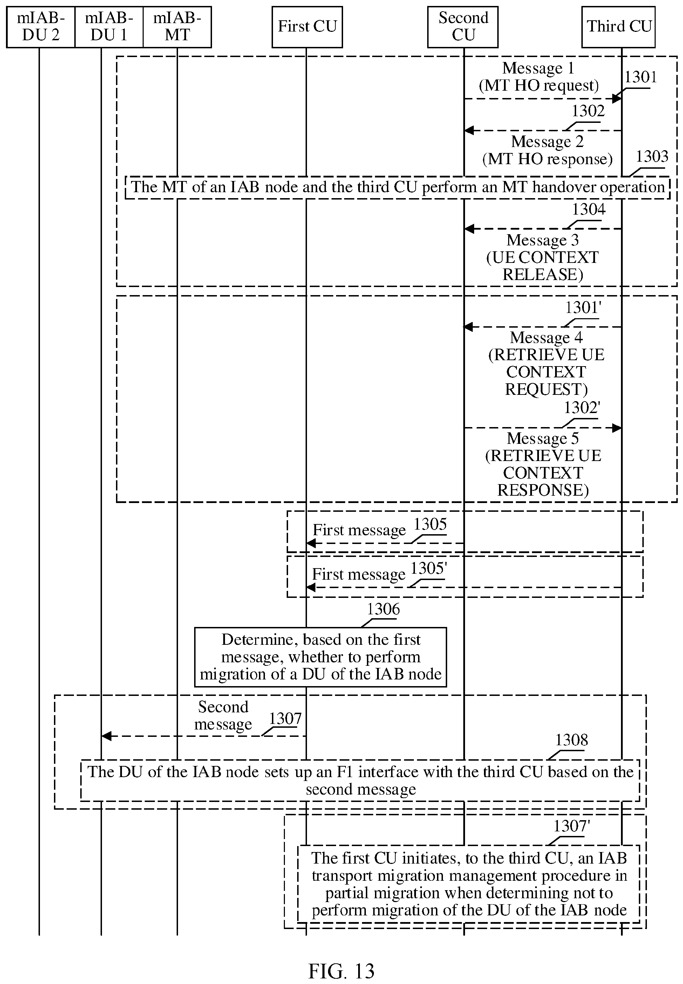

FIG. 13 is an interaction flowchart of another method for migrating a DU in an IAB network according to an embodiment of this application. A method procedure in FIG. 13 is a possible implementation of the method described in FIG. 12. As shown in FIG. 13, the method includes the following steps.

1301: A second CU sends a message 1 to a third CU.

Correspondingly, the third CU receives the message 1 from the second CU. The message 1 is used for requesting to hand over an MT to a topology under the third CU. The message 1 may be an MT HO request. The message 1 may include an XnAP ID of the MT under a first CU (the XnAP ID needs to be carried when step 1305' is performed, and a specific reason is provided in step 1305'). The second CU knows the XnAP ID of the MT under the first CU. The reason is that when the MT of an IAB node is migrated from the first CU to the second CU, a handover preparation interaction process and an IAB TRANSPORT MIGRATION MANAGEMENT traffic migration process have been performed. Therefore, the second CU knows the XnAP ID of the first CU. A handover preparation procedure includes exchange of a handover request message and a handover request acknowledge message.

1302: The third CU sends a message 2 to the second CU.

Correspondingly, the second CU receives the message 2 from the third CU. The message 2 may be a HANDOVER REQUEST ACKNOWLEDGE about the MT. The message 2 may be considered as a message with which the third CU replies to the second CU for the message 1. The message 2 may include an XnAP ID of the MT under the second CU, an XnAP ID of the MT under the third CU, and an IP address of the MT under the third CU (the MT's IP address under the third CU). Optionally, the message 2 carries an IP address of a donor DU managed by the third CU or an IP address of the third CU. The IP address of the donor DU managed by the third CU may be obtained by the third CU based on a donor-DU to which a target cell of the MT belongs (theoretically, one donor-CU may be connected to a plurality of donor-DUs). A function of carrying the IP address herein is used by the first CU to subsequently determine whether an IP path exists between the first CU and the donor DU managed by the third CU or the third CU. A reason why "the message 2 carries an IP address of a donor DU managed by the third CU or an IP address of the third CU" is optional rather than mandatory is that the first CU may alternatively be internally implemented. For example, the first CU determines, based on a gNB ID of the third CU, that there is the IP path between the first CU and the donor DU managed by the third CU or the third CU.

1303: The MT of the IAB node and the third CU perform an MT handover operation.

Step 1303 may be understood as a subsequent step in which the MT of the IAB node and the third CU perform MT handover. Step 1303 may be implemented by using a conventional technology, and details are not described herein.

1304: The third CU sends a message 3 to the second CU.

The message 3 indicates the second CU to release a UE context related to the MT of the IAB node. For example, the message 3 is a UE CONTEXT RELEASE.

1301': A third CU sends a message 4 to a second CU.

Correspondingly, the second CU receives the message 4 from the third CU. The message 4 is used for requesting, from the second CU, a UE context related to an MT of an IAB node. The message 4 includes an XnAP ID of the MT under the second CU and an XnAP ID of the MT under the third CU. Optionally, the message 4 includes an IP address of the third CU or an IP address of a donor DU managed by the third CU. For example, the message 4 is a RETRIEVE UE CONTEXT REQUEST. In a possible implementation, an RLF occurs between the MT and the second CU. Then, the MT performs an RLF recovery procedure, and re-accesses a topology under the third CU. Then, the third CU sends the message 4 to the second CU.

1302': The second CU sends a message 5 to the third CU.

Correspondingly, the third CU receives the message 5 from the second CU. Optionally, the message 5 carries an XnAP ID of the MT under the first CU (the XnAP ID needs to be carried when step 1305' below is performed, and a specific reason is provided in step 1305'). For example, the message 5 is a RETRIEVE UE CONTEXT RESPONSE.

Step 1301 to step 1304, and step 1301' and step 1302' are two different implementations. It should be understood that the method procedure in FIG. 13 includes step 1301 to step 1304, or includes step 1301' and step 1302'. This is not limited in this embodiment of this application.

1305: The second CU sends a first message to the first CU.

The first message includes an ID of the third CU, the XnAP ID of the MT under the first CU, the XnAP ID of the MT under the second CU, and the XnAP ID of the MT under the third CU. Optionally, the first message includes the IP address of the third CU or the IP address of the donor DU managed by the third CU. A trigger condition for the second CU to send the first message to the first CU may be any one of the following: The second CU receives the message 2 from the third CU; the second CU receives the message 3 from the third CU; or the second CU receives the message 4 from the third CU. For example, the method procedure in FIG. 13 includes step 1301 to step 1304. After receiving the message 2 from the third CU, the second CU performs step 1305. A sequence of performing step 1303 and step 1305 by the second CU is not limited. For another example, the method procedure in FIG. 13 includes step 1301 to step 1304. After receiving the message 3 from the third CU, the second CU performs step 1305. For another example, the method procedure in FIG. 13 includes step 1301' and step 1302'. After receiving the message 4 from the third CU, the second CU performs step 1305. A sequence of performing step 1302' and step 1305 by the second CU is not limited.

1305': The third CU sends a first message to the first CU.

The first message in step 1305' may be the same as the first message in step 1305, and details are not described herein again. A trigger condition for the third CU to send the first message to the first CU may be any one of the following: The third CU sends the message 2 to the second CU; the third CU sends the message 3 to the second CU; the third CU sends the message 4 to the second CU; the third CU receives the message 1 from the second CU; or the third CU receives the message 5 from the second CU. For example, the method procedure in FIG. 13 includes step 1301 to step 1304. After sending the message 2 to the second CU, the third CU performs step 1305'. A sequence of performing step 1305' and step 1303 by the third CU is not limited. For example, the method procedure in FIG. 13 includes step 1301 to step 1304. After sending the message 3 to the second CU, the third CU performs step 1305'. For example, the method procedure in FIG. 13 includes step 1301 to step 1304. After receiving the message 1 from the second CU, the third CU performs step 1305'. A sequence of performing step 1305' and step 1302 by the third CU is not limited. For example, the method procedure in FIG. 13 includes step 1301' and step 1302'. After sending the message 4 to the second CU, the third CU performs step 1305'. For example, the method procedure in FIG. 13 includes step 1301' and step 1302'. After receiving the message 5 sent by the second CU, the third CU performs step 1305'. Because the first message is an Xn message between the third CU and the first CU, the Xn message needs to carry the XnAP IDs of the MT under the first CU and the third CU, and the XnAP ID of the MT under the first CU is carried in the message 1 in step 1301 or the message 5 in step 1302'. Therefore, step 1305' is for step 1302'.

It should be understood that step 1305 and step 1305' are two possible implementations in which the first CU receives the first message. The method procedure in FIG. 13 includes step 1305 or step 1305'. The foregoing lists an example in which step 1301 to step 1304 are combined with step 1305, and an example in which step 1301' and step 1302' are combined with step 1305. The foregoing further lists an example in which step 1301 to step 1304 are combined with step 1305', and an example in which step 1301' and step 1302' are combined with step 1305'.

1306: The first CU determines, based on the first message, whether to perform migration of the DU of the IAB node.

For step 1306, refer to step 1202.

1307: The first CU sends a second message to the DU of the IAB node when determining to perform migration of the DU of the IAB node.

For step 1307, refer to step 1203.

1308: The DU of the IAB node sets up an F1 interface with the third CU based on the second message.

For step 1308, refer to step 1204. Step 1307 and step 1308 are optional. Step 1307 and step 1308 may be replaced with the following step 1307'.

1307': The first CU initiates, to the third CU, an IAB transport migration management procedure in partial migration when determining not to perform migration of the DU of the IAB node.

The solution in embodiments of this application may support the DU migration triggered by a topology change of the MT, and resolves a problem in which DU migration in a continuous partial migration process is not supported in the conventional technology.

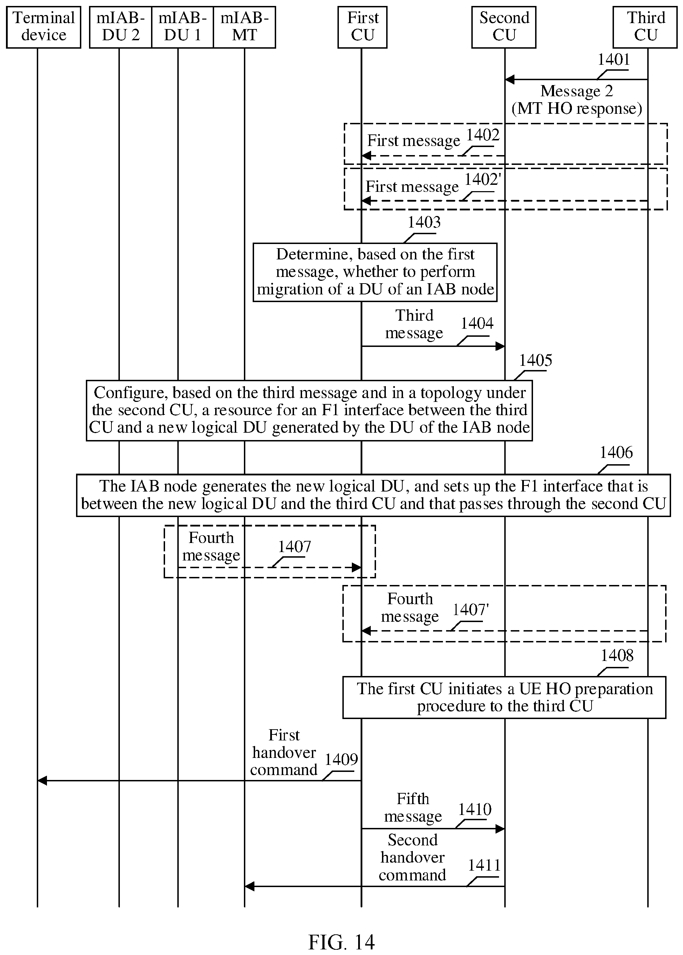

In the solutions in FIG. 12 and FIG. 13, in some cases, the first CU is notified by using the first message only after the MT has completed handover or RLF recovery. This is a little late because the MT has arrived at the topology under the third CU at this time. If the first CU finds that an IP of the donor DU managed by the third CU or an IP of the third CU is unroutable at this time, transmission of a message of an F1 interface between the first CU and the DU of the IAB node cannot be directly performed through the donor DU managed by the third CU, so that the transmission of the message may be performed only through an NG interface, to reach a core network in a detoured way. This is not what we expect to see. For example, for subsequent UE handover, the first CU cannot directly send a message to the DU of the IAB node through a cross-topology F1 interface, and then send a handover command to a UE (the handover command sent by the CU to the UE is encapsulated in an F1-C message between the CU and the DU of the IAB node and sent to the DU of the IAB node, and then the DU of the IAB node decapsulates the F1-C message and sends the handover command to the UE). Instead, the message needs to be sent to the DU of the IAB node through the core network (F1-C over NGAP) in a detoured way, to send the handover command to the UE. Such F1-C over NGAP makes F1-C transmission very slow. To avoid a problem that the DU migration is slow because the first CU cannot directly send the message to the DU of the IAB node through the cross-topology F1 interface, an embodiment of this application provides a DU migration solution that can avoid NG interaction. Refer to a method procedure in FIG. 14.

FIG. 14 is an interaction flowchart of another method for migrating a DU in an IAB network according to an embodiment of this application. A method procedure in FIG. 14 is a possible implementation of the method described in FIG. 12. In this implementation, after determining to migrate a DU of an IAB node, a first CU indicates a second DU not to perform MT handover temporarily, and configures, in a topology under the second DU, a resource for an F1 interface between the DU of the IAB node and a third CU. This can avoid NG interaction, so that DU migration is accelerated. As shown in FIG. 14, the method includes the following steps.

1401: The third CU sends a message 2 to the second CU.

For step 1401, refer to step 1302. For example, before sending the message 2 to the second CU, the third CU receives a message 1 from the second CU; and the third CU sends the message 2 to the second CU for the message 1.

1402: The second CU sends a first message to the first CU.

For step 1402, refer to step 1305.

1402': The third CU sends a first message to the first CU.

For step 1402', refer to step 1305'. It should be understood that step 1402 and step 1402' are two possible implementations in which the first CU receives the first message. The method procedure in FIG. 14 includes step 1402 or step 1402'.

1403: The first CU determines, based on the first message, whether to perform migration of the DU of the IAB node.

For step 1403, refer to step 1202. After determining, based on the first message, not to perform migration of the DU of the IAB node, the first CU may initiate, to the third CU, an IAB transport migration management procedure in partial migration. Refer to step 1203'.

1404: When determining to perform migration of the DU of the IAB node, the first CU sends a third message to the second CU.

For step 1404, refer to step 1203".

1405: The second CU configures, based on the third message and in the topology under the second CU, a resource for an F1 interface between the third CU and a new logical DU generated by the DU of the IAB node.

A possible implementation of step 1405 is as follows: configuring a resource serving a cross-topology F1-C on a node (for example, a donor-DU 2) in the topology under the second CU, and notifying, to an mIAB-MT by using an RRC message, a default BAP configuration used for transmission of an F1-C message.

1406: The IAB node generates the new logical DU, and sets up the F1 interface that is between the new logical DU and the third CU and that passes through the second CU.

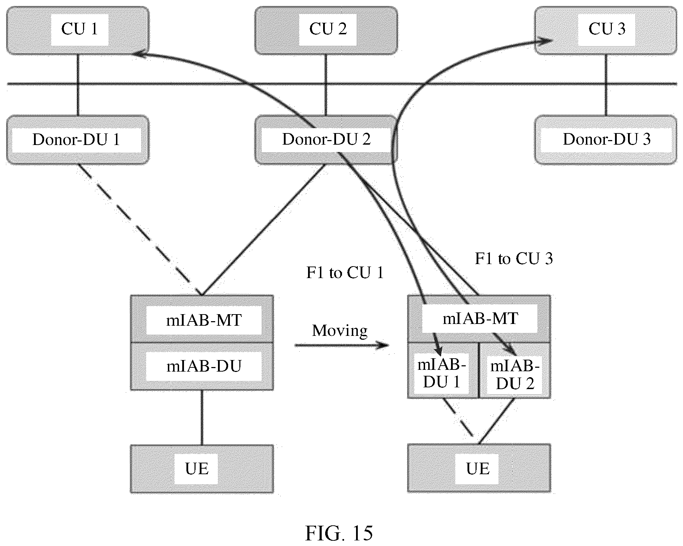

For example, after receiving the default BAP configuration, the mIAB-MT turns on a new logical DU on the IAB node, that is, a DU 2 of the IAB node, and exchanges an F1 SETUP REQUEST/RESPONSE message with the third CU by using the resource configured in step 1405. For ease of understanding, an F1 interface that is between the DU 2 of the IAB node and the third CU and that passes through the topology under the second CU is shown in FIG. 15. FIG. 15 shows an example of continuous partial migration according to an embodiment of this application. In FIG. 15, a CU 1 is a first CU, a CU 2 is a second CU, a CU 3 is a third CU, a donor-DU 1 is a donor DU managed by the first CU, a donor-DU 2 is a donor DU managed by the second CU, a donor-DU 3 is a donor DU managed by the third CU, an mIAB-DU 1 represents a DU of an IAB node, an mIAB-DU 2 represents a new logical DU, and an arrow indicated by 1501 represents an F1 interface that is between the mIAB-DU 2 and the third CU and that passes through a topology under the second CU.

1407: The DU of the IAB node sends a fourth message to the first CU.

Correspondingly, the first CU receives the fourth message from the DU of the IAB node. The fourth message indicates that the F1 interface between the DU of the IAB node and the third CU has been set up. For example, the fourth message includes a gNB-DU ID of the DU of the IAB node and a gNB ID of the third CU.

1407': The third CU sends a fourth message to the first CU.

Correspondingly, the first CU receives the fourth message from the third CU. It should be understood that step 1407 and step 1407' are two possible implementations in which the first CU receives the fourth message. The method procedure in FIG. 14 includes step 1407 or step 1407'.

1408: The first CU initiates a UE HO preparation procedure to the third CU.

For example, after receiving the fourth message, the first CU should already be capable of receiving a measurement report of a UE that includes a cell served by the DU 2 of the IAB node. After receiving the measurement report, the first CU initiates the UE HO preparation procedure to the third CU. In another possible implementation, the first CU may not select a target cell based on the measurement report of the UE, but obtain the target cell of the UE in another manner. For example, a target CU (the third CU) to which the UE is handed over or the IAB node directly notifies the first CU of the target cell of the UE. If there is no IP path between the first CU and the third CU, the HO preparation procedure may be performed through NG interaction.

1409: The first CU sends a first handover command to a terminal device.

The first handover command indicates the terminal device to be handed over to the target cell served by the DU of the IAB node.

1410: The first CU sends a fifth message to the second CU.

The fifth message indicates that the first CU has sent the first handover command. For example, after sending the first handover command to the terminal device, the first CU sends the fifth message to the second CU. The fifth message notifies the second CU that the first CU has sent a handover command (HO Command) to all terminal devices.

1411: The second CU sends a second handover command to an MT.

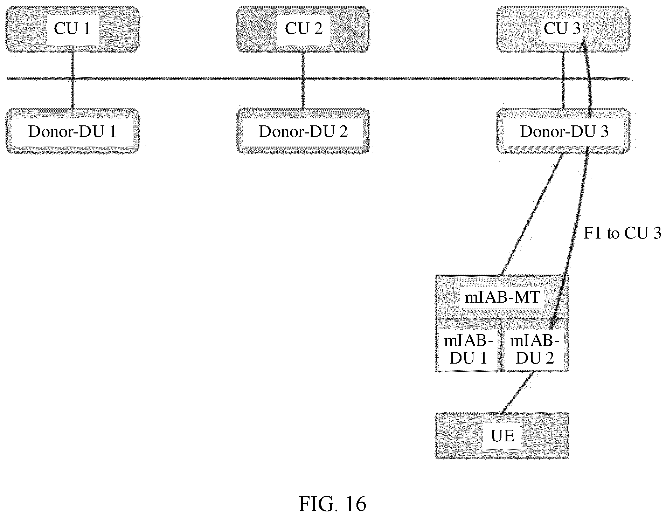

The second handover command is used for the MT of the IAB node to be handed over to a topology under the third CU. FIG. 16 shows an example of a status after completion of MT handover in an IAB network according to an embodiment of this application. In FIG. 16, a CU 1 is a first CU, a CU 2 is a second CU, a CU 3 is a third CU, a donor-DU 1 is a donor DU managed by the first CU, a donor-DU 2 is a donor DU managed by the second CU, a donor-DU 3 is a donor DU managed by the third CU, an mIAB-DU 1 represents a DU of an IAB node, and an mIAB-DU 2 represents a new logical DU. FIG. 16 shows the status after the MT (namely, the mIAB-MT) of the IAB node is handed over to a topology under the third CU. A line with arrows represents an F1 interface between the mIAB-DU 2 and the third CU. In this case, the mIAB-DU 1 is turned off.

For all interaction between the first CU and the third CU in the method procedure in FIG. 14, if there is no IP path between the first CU and the third CU, the first CU and the third CU may interact with each other through the core network and the NG interface (in comparison with the F1-C over NGAP, interaction between the CUs through the core network is a conventional operation).

This embodiment of this application is similar to a full nested migration procedure in the full migration described in the background. It may be understood as that full nested migration is applied to an enhanced version of the three CUs, and this is used for better handover of the UE. Before the MT is handed over, the new logical DU is activated and the cross-topology F1 interface is set up. After the handover command is delivered to the UE, the handover command is immediately delivered to the MT. A main difference between the three CUs in this embodiment of this application and the existing two CUs in the full nested migration lies in that step 1403 and step 1410 need to exist in a scenario of the three CUs. A target CU to which both the MT and the DU are migrated is the third CU, a source CU of the MT is the second CU, and a source CU of the DU is the first CU. Therefore, in step 1403, the first CU needs to notify the second CU not to hand over the MT and set up the cross-topology F1 interface temporarily. In step 1310, the first CU also needs to notify the second CU that the HO command of the UE has been delivered, and the MT may be handed over. If the first CU and the second CU in the scenario of the three CUs are a same CU, the CUs are actually the two CUs in the full nested migration, and step 1403 and step 1410 are not needed.

In this embodiment of this application, after determining to migrate the DU of the IAB node, the first CU indicates the second DU not to perform MU handover temporarily, and configures, in the topology under the second DU, the resource for the F1 interface between the DU of the IAB node and the third CU. This can avoid the NG interaction, so that the DU migration is accelerated.

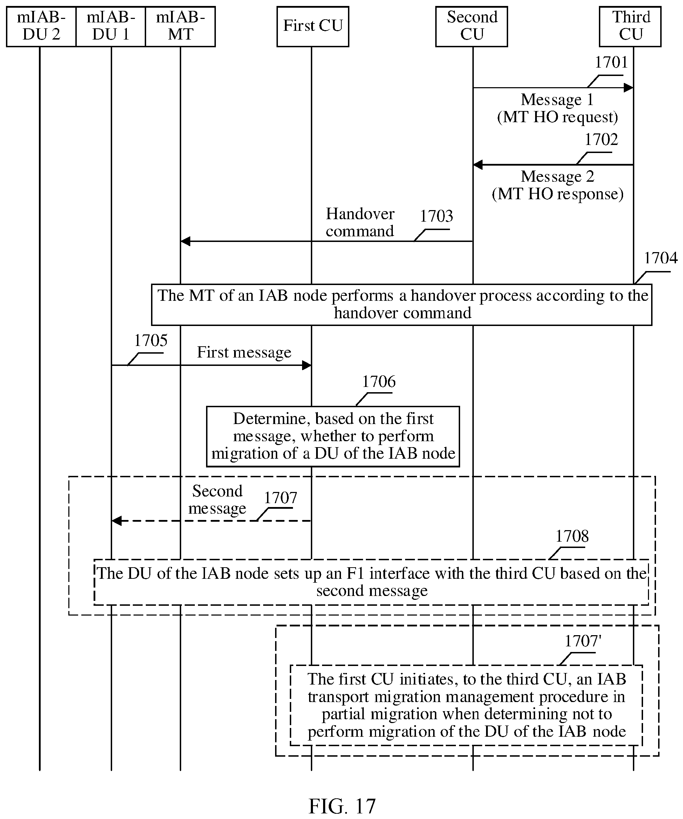

A specific procedure for step 1201" is not described in detail in the method procedure in FIG. 12. In other words, a specific procedure in which the DU of the IAB node sends the first message to the first CU is not described in detail. The following describes, with reference to the accompanying drawings, the specific procedure in which the DU of the IAB node sends the first message to the first CU. FIG. 17 is an interaction flowchart of another method for migrating a DU in an IAB network according to an embodiment of this application. A method procedure in FIG. 17 is a possible implementation of the method described in FIG. 12. As shown in FIG. 17, the method includes the following steps.

1701: A second CU sends a message 1 to a third CU.

Correspondingly, the third CU receives the message 1 from the second CU. For step 1701, refer to step 1301. The message 1 may be an MT HO REQUEST message about an mIAB-MT sent by the second CU to the third CU, and an MT HO REQUEST message carries an XnAP ID of the mIAB-MT under the second CU. Optionally, the MT HO REQUEST further carries an XnAP ID of the mIAB-MT under a first CU. Herein, a reason why the XnAP ID of the first CU is carried is that in step 1707, if a manner of DU migration is not directly sending a first message to a DU of an IAB node by the first CU, but instead needs exchange, between the first CU and the third CU, of a message similar to a DU migration request (this is not described in this embodiment of this application, and related descriptions are provided subsequently), and if the DU migration request carries only the XnAP ID of the mIAB-MT under the first CU, in this case, the third CU needs to understand that the MT associated with an Xn message about DU migration is an MT that initiates handover in the 1st step (namely, step 1701). Therefore, the third CU needs to obtain the XnAP ID under the first CU in the 1st step. This case occurs only when the DU migration request is needed in step 1707. In addition, there is no requirement that the third CU needs to know in advance the XnAP ID of the mIAB-MT under the first CU. Therefore, "the MT HO REQUEST further carries an XnAP ID of the mIAB-MT under a first CU" is optional. Step 1701 is similar to step 1301, and a difference lies only in that a condition for whether the XnAP ID of the mIAB-MT under the first CU is carried herein is different from that in step 1301.

1702: The third CU sends a message 2 to the second CU.

Correspondingly, the second CU receives the message 2 from the third CU. For step 1702, refer to step 1302.

1703: The second CU sends a handover command to the MT of the IAB node.

The handover command is used by the MT of the IAB node to perform a handover process, that is, hand over from a topology under the second CU to a topology under the third CU. The handover command carries an XnAP ID of the MT of the IAB node under the third CU, and the XnAP ID of the MT under the third CU is used by the IAB node to further notify the first CU of the information. If a HANDOVER REQUEST ACKNOWLEDGE about the MT in step 1702 carries an IP address of a donor DU managed by the third CU or an IP address of the third CU, the handover command may also carry the IP address of the donor DU managed by the third CU or the IP address of the third CU. Optionally, the handover command carries a gNB ID of the third CU. This is optional because the MT of the IAB node may alternatively obtain the gNB ID of the third CU by listening to a SIB 1 message of a neighboring cell. It should be noted that the XnAP ID of the MT under the third CU, the IP address of the donor DU managed by the third CU or the IP address of the third CU, and the gNB ID of the third CU may alternatively be carried in another same RRC message or different RRC messages, and are sent by the second CU to the MT of the IAB node.

1704: The MT of the IAB node performs the handover process according to the handover command.

Since it is a common technical means in this field that the MT of the IAB node performs the handover process according to the handover command, details are not described herein again.

1705: The DU of the IAB node sends the first message to the first CU.

The first message is an F1 message. For step 1705, refer to step 1201".

1706: The first CU determines, based on the first message, whether to perform migration of the DU of the IAB node.

For step 1706, refer to step 1202.

1707: The first CU sends a second message to the DU of the IAB node when determining to perform migration of the DU of the IAB node.

For step 1707, refer to step 1203.

1708: The DU of the IAB node sets up an F1 interface with the third CU based on the second message.

For step 1708, refer to step 1204.

1707': The first CU initiates, to the third CU, an IAB transport migration management procedure in partial migration when determining not to perform migration of the DU of the IAB node.

For step 1707', refer to step 1203".

The method procedure in FIG. 17 includes step 1707 and step 1708, or step 1707'.

In this embodiment of this application, the DU of the IAB node sends the first message to the first CU, to notify the first CU that the MT has been handed over, so that the first CU is triggered to determine whether to migrate the DU. The first CU determines, based on whether an IP between the first CU and the donor DU managed by the third CU or the third CU is routable, whether to migrate the DU. If the first CU determines to migrate the DU, the first CU sends the second message to the DU of the IAB node. This resolves a problem in which DU migration in a continuous partial migration process is not supported in a conventional technology.

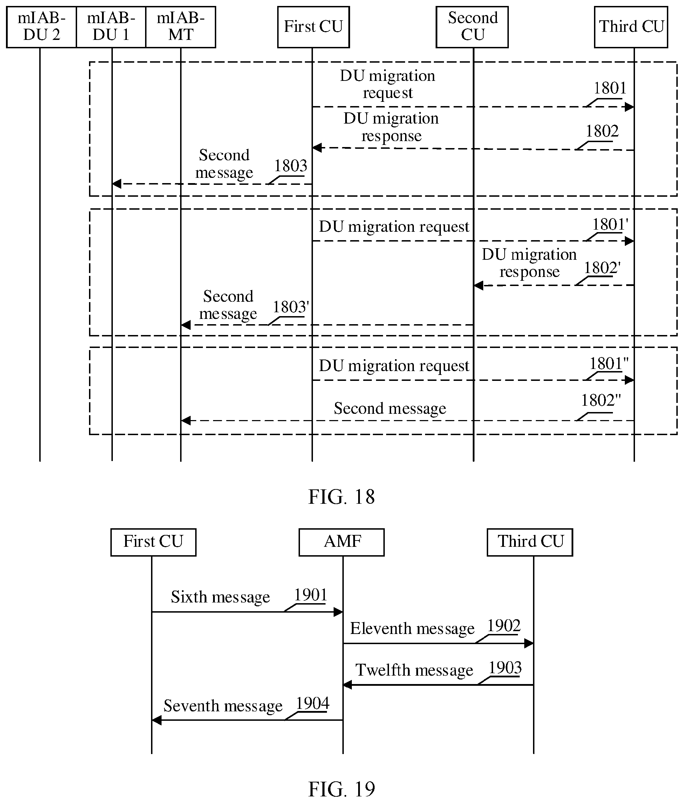

In the method procedures in FIG. 12, FIG. 13, and FIG. 17, the first CU sends the second message to the DU of the IAB node. The following further describes several implementations of sending the second message to the DU of the IAB node with reference to the accompanying drawings. FIG. 18 is a flowchart of information exchange according to an embodiment of this application. As shown in FIG. 18, the method includes the following steps.

1801: A first CU sends a DU migration request to a third CU.

The DU migration request (DU migration request) is used for requesting to migrate a DU of an IAB node to a topology under the third CU. The DU migration request includes an XnAP ID of an MT of the IAB node under the first CU. Optionally, the DU migration request includes an XnAP ID of the MT of the IAB node under the third CU, QoS information, and an IP address of UE traffic.

1802: The third CU sends a DU migration response to the first CU.

The DU migration response (DU migration response) is a message returned by the third CU to the first CU for the DU migration request. The DU migration response indicates that the third CU agrees to migrate the DU of the IAB node to the topology under the third CU. Alternatively, the DU migration response indicates that the third CU has learned that the DU of the IAB node is migrated to the topology under the third CU.

1803: The first CU sends a second message to the DU of the IAB node.

For example, the first CU sends the second message to the DU of the IAB node through an F1 interface between the first CU and the DU of the IAB node.

1801': A first CU sends a DU migration request to a third CU.

For step 1801', refer to step 1801.

1802': The third CU sends a DU migration response to a second CU.

1803': The second CU sends a second message to an MT of an IAB node.

For example, the second CU sends the second message to an mIAB-MT through an RRC connection between the second CU and the mIAB-MT. Step 1801' to step 1803' are applicable to a case in which DU migration is performed before MT handover. In this case, the MT is still connected to a topology under the second CU.

1801": A first CU sends a DU migration request to a third CU.

For step 1801", refer to step 1801.

1802": The third CU sends a second message to an MT of an IAB node.

For example, the third CU directly sends the second message to an mIAB-MT through an RRC connection between the third CU and the mIAB-MT. Step 1801" and step 1802" are used when the DU migration is performed later than the MT handover. In this case, the MT has been connected to a topology under the third CU.

The second message may carry both an XnAP ID of the mIAB-MT under the first CU and an XnAP ID of the mIAB-MT under the third CU, or may carry only an XnAP ID of the mIAB-MT under the first CU. If there is no Xn interface between the first CU and the third CU (for example, when an IP is unroutable), the second message may alternatively be transferred through an NG interface or forwarded by a second CU.

It should be understood that step 1801 to step 1803 are an independent interaction procedure, step 1801' to step 1803' are another independent interaction procedure, and step 1801" and step 1802" are still another independent interaction procedure. FIG. 18 shows three possible manners of sending the second message to the DU of the IAB node.

In this embodiment of this application, optional enhancement is further introduced. To be specific, the second message carries the IP address and the QoS information of the UE traffic. In this way, the third CU can know, in advance, UE traffic information (for example, QoS) brought by the DU migration, to perform configuration in advance, instead of obtaining the traffic information of a UE by using a UE HO REQUEST after the subsequent DU migration is completed.

Embodiments of this application provide various possible DU migration interaction methods, so that the DU migration can be performed.

The following describes, with reference to the accompanying drawings, a specific manner in which the first CU initiates, to the third CU, the IAB transport migration management procedure (refer to step 1203') in the partial migration. FIG. 19 is a flowchart of another information exchange method according to an embodiment of this application. FIG. 19 describes a manner in which a first CU initiates, to a third CU, an IAB transport migration management procedure in partial migration when there is no Xn interface between the first CU and the third CU. As shown in FIG. 19, the method includes the following steps.

1901: The first CU sends a sixth message to an AMF.

The sixth message includes an IP address of traffic of an IAB node under the third CU, QoS information of the traffic of the IAB node, and an NGAP ID of the third CU. The AMF may be replaced with another network element that has an access and mobility management function.

1902: The AMF sends an eleventh message to the third CU.

The eleventh message includes the IP address of the traffic of the IAB node under the third CU, the QoS information of the traffic of the IAB node, and an NGAP ID of the first CU. The eleventh message may be considered as a sixth message forwarded by the AMF to the third CU.

1903: The third CU sends a twelfth message to the AMF.

The twelfth message includes backhaul link information under the third CU, DSCP or flow label (Flow Label) information of the traffic of the IAB node, and the ID of the first CU.

1904: The AMF sends a seventh message to the first CU.

The seventh message includes the backhaul link information under the third CU, the DSCP or flow label (Flow Label) information of the traffic of the IAB node, and the ID of the third CU. The seventh message may be considered as a seventh message forwarded by the AMF to the first CU.

The sixth message, the seventh message, the eleventh message, and the twelfth message are messages on an NG interface. In an example of this embodiment of this application, a key information element in an IAB TRANSPORT MIGRATION MANAGEMENT REQUEST/RESPONSE message on an Xn interface is transferred in a new message on the NG interface. A key information element transferred by the first CU to the third CU includes an IP address and a QoS parameter of each piece of traffic, and a key information element transferred by the third CU to the first CU includes backhaul link information allocated by the third CU to the traffic in a topology under the third CU, and a DSCP/flow label configured for the QoS parameter. The DSCP/flow label is used by the first CU to add the DSCP/flow label to an IP header of downlink traffic sent by the first CU.

In this embodiment of this application, a new NG message is introduced, and the key information element in the IAB TRANSPORT MIGRATION MANAGEMENT REQUEST/RESPONSE message on the Xn interface is transferred in the new message on the NG interface, so that partial migration can still work when there is no IP path between a source CU and a target CU or between a source CU and a target donor-DU.

In a common scenario, a cell identity (including a PCI and a CGI) of each cell is preconfigured by a network management system. This can ensure that the cell identity does not conflict with a cell identity of a neighboring cell. Because a base station is fixed, the cell identity does not need to be changed. However, in a mobile IAB scenario, a cell served by a DU of the IAB node continuously moves with the IAB node. If the cell served by the DU of the IAB node always uses a cell identity that remains unchanged, a cell identity conflict may occur between the cell and a current nearby cell due to a change of a neighbor relationship. Therefore, the cell identity of the cell served by the DU of the IAB node may need to be changed. However, for a cell of the DU that is providing a service for a UE, a cell identity of the cell cannot be directly and suddenly changed. If the cell identity of the cell can be directly and suddenly changed, a link of the UE is interrupted. In addition to the cell identity, cases of TAC and RANAC in cell broadcast information are similar. These parameters do not need to be changed when the base station is fixed. However, in the mobile IAB scenario, the TAC and the RANAC may no longer reflect current geographical location information, and also need to be updated. In addition, for the cell of the DU that is providing the service for the UE, the broadcast parameters cannot be directly and suddenly changed. If the broadcast parameters can be directly and suddenly changed, the link of the UE is interrupted. In view of this, a solution provided in embodiments of this application is to activate some new cells served by the DU of the IAB node (a new DU does not necessarily need to be started like DU migration, and a new cell needs to be started in a same DU herein), and then perform cell handover on the UE, so that the UE is handed over from an old PCI/CGI/TAC/RANAC cell (a conflict occurs or a PCI/CGI/TAC/RANAC needs to be changed) to a new PCI/CGI/TAC/RANAC cell.

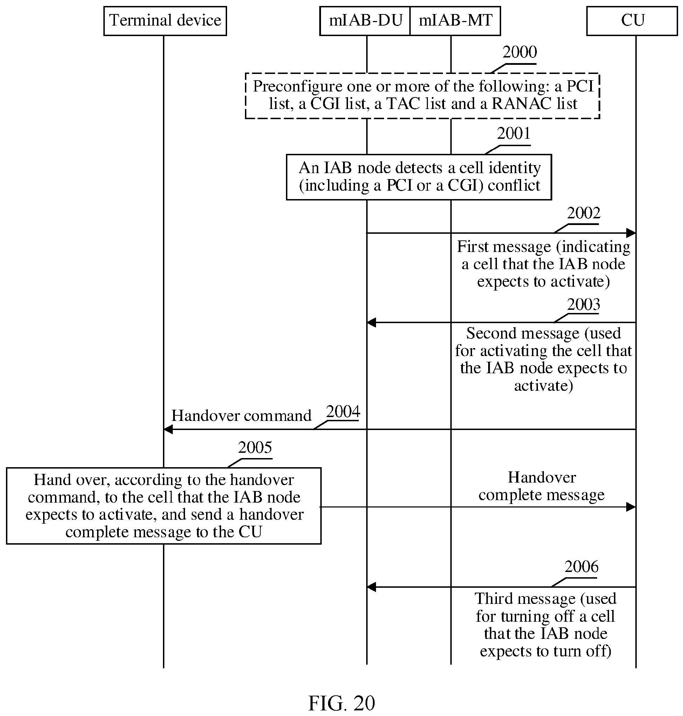

Refer to FIG. 20. An embodiment of this application provides an interaction flowchart of a cell handover method. The method may be performed through interaction between a UE, an IAB node, and a donor node (Donor-CU). The IAB node includes an IAB-DU and an IAB-MT. In actual application, the donor node may set up F1 connections to a plurality of IAB nodes to perform data exchange. Only one IAB node is used as an example for description herein. However, in actual application, a quantity of IAB nodes is not limited. As shown in FIG. 20, the method includes the following steps.

2000: The IAB node preconfigures one or more of the following: a PCI list, a CGI list, a TAC list and a RANAC list.

For example, a network management system preconfigures one or more of the following for the IAB node: the PCI list, the CGI list, the TAC list and the RANAC list. TAC (tracking area code) means the tracking area code. RANAC (radio access network area code) means wireless network area code. When the TAC list (list) and the RANAC list are preconfigured, a corresponding gNB ID or CGI may be further configured. For example, the PCI list or the CGI list includes a PCI or CGI resource pool, and when a PCI or a CGI needs to be changed, any item different from a current PCI or CGI is selected from the PCI list or the CGI list; and the TAC list or the RANAC list includes a correspondence between {gNB ID or CGI} and {TAC or RANAC}, and when the IAB node determines, based on a gNB ID or a CGI broadcast by a current parent node, that the TAC or the RANAC needs to be changed, a corresponding TAC or RANAC is selected from the correspondence. It should be noted that step 2000 is a preconfiguration operation, and the IAB node may not need to perform step 2000 before performing step 2001. For example, after the IAB node preconfigures the PCI list, and before the preconfigured PCI list is updated, the IAB node detects, by using the PCI list, whether a PCI conflict occurs. In this example, the IAB node does not need to perform step 2000 each time before performing step 2001. In other words, after the IAB node preconfigures the one or more of the following: the PCI list, the CGI list, the TAC list and the RANAC list, step 2001 may be directly performed subsequently, and step 2000 does not need to be performed.

2001: The IAB node detects a cell identity (including the PCI or the CGI) conflict.

That the IAB node detects a PCI/CGI conflict may be that a PCI/CGI that is of a nearby cell and that is heard by the MT of the IAB node is the same as a PCI/CGI of a cell served by the DU of the IAB node. Step 2001 may alternatively be replaced with the following: The IAB node expects to change a serving cell of a UE due to another reason, or the IAB node determines, based on the heard CGI or gNB ID of the parent node, that the TAC or the RANAC broadcast in the cell needs to be changed, where for example, in the TAC list or the RANAC list, an item corresponding to the current gNB ID or CGI is different from the TAC or the RANAC broadcast in the current IAB-DU cell.

2002: The DU of the IAB node sends a first message to the CU.

Correspondingly, the CU receives the first message from the DU of the IAB node. The first message indicates a cell that the IAB node expects to activate. The PCI is used as an example. The first message includes a list, and the list includes a PCI of the cell that is expected to be activated. For another example, the first message includes indication information 1 and a PCI of one or more cells, and the indication information 1 indicates that a cell corresponding to the PCI of the one or more cells is the cell that is expected to be activated. For example, the first message is a gNB-DU Configuration Update message. For the gNB-DU Configuration Update message, refer to the standard TS 38.473 V17.2.0 Section 9.2.1.7. A CGI, TAC, and RANAC of the cell that is expected to be activated are carried in the same way as the PCI.

2003: The CU sends a second message to the DU of the IAB node based on the first message.

The second message is used for activating the cell that the IAB node expects to activate. For example, the second message is a gNB-DU Configuration Update ACK message. For the gNB-DU Configuration Update ACK message, refer to the standard TS 38.473 V17.2.0 Section 9.2.1.8.

2004: The CU sends a handover command to a terminal device.

Correspondingly, the terminal device receives the handover command from the CU. The handover command is used for the terminal device to be handed over to the cell that the IAB node expects to activate. After sending the second message to the DU of the IAB node, the CU sends the handover command to the terminal device.

2005: Hand over the terminal device, according to the handover command, to the cell that the IAB node expects to activate, and sends a handover complete message to the CU.

Correspondingly, the CU receives the handover complete message from the terminal device. The handover complete message indicates that the terminal device has been handed over to the cell that the IAB node expects to activate.

2006: The CU sends a third message to the DU of the IAB node.

The third message is used for turning off a cell that the IAB node expects to turn off. For example, the CU indicates, by using an RRC message or an F1 message, the IAB node to deactivate (or turn off) the old cell.

In a possible implementation, the first message further indicates the cell that the IAB node expects to turn off; and after receiving the handover complete message from the terminal device, the CU sends the third message to the DU of the IAB node. The PCI is used as an example. The DU of the IAB node may notify, by sending the first message to the CU, the CU of which cells (new PCIs) of the DU are expected to be activated and which cells (old PCI cells) of the DU are expected to be "deactivated" (turned off). Specifically, a PCI of each cell served by the DU may be carried in the message, and a corresponding indication is separately carried for the cell that is expected to be activated and the cell that is expected to be deactivated. Alternatively, a table is used for representing a mapping relationship between a new cell PCI and an old cell PCI. A column corresponding to new cells is cells that are expected to be activated, and a column corresponding to old cells is cells that are expected to be deactivated, to notify the CU of the cells corresponding to the PCIs that are expected to be activated, and the cells corresponding to the PCIs that are expected to be turned off. Manners of turning off old cells related to the CGI, the TAC, and the RANAC are the same as a manner of turning off the old cell related to the PCI. It should be noted that meanings of the first message, the second message, and the handover command in the method procedure in FIG. 20 are different from the foregoing meanings.

In this embodiment, when the IAB node expects to change the PCI/CGI/TAC/RANAC, or expects to change the UE cell, the IAB node notifies the CU of the new cell that the IAB node expects to activate. The CU activates the cell based on an indication, then performs UE handover, and indicates the IAB node to turn off the old cell after the UE handover is completed. In comparison with a conventional technology, in this embodiment of this application, a conflict solution after the IAB node detects the PCI or CGI conflict is supported, and a solution in which the IAB node detects, based on a currently accessed gNB ID or CGI, that the TAC or the RANAC needs to be changed is supported. This reduces an interference problem caused by the PCI or CGI conflict that may occur in a mobile IAB scenario, and reduces a problem that the TAC or the RANAC broadcast by the mobile IAB cannot reflect current geographical location information.

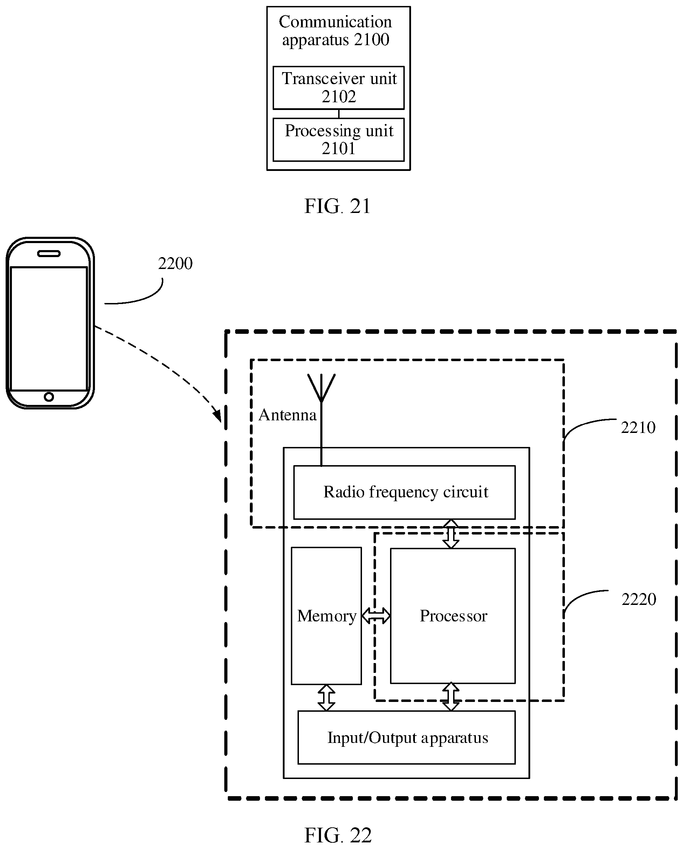

FIG. 21 is a possible example block diagram of a communication apparatus in an embodiment of this application. As shown in FIG. 21, the communication apparatus 2100 may include a processing unit 2101 and a transceiver unit 2102. The processing unit 2101 is configured to control and manage an action of the communication apparatus 2100. The transceiver unit 2102 is configured to support the communication apparatus 2100 in communicating with another device. Optionally, the transceiver unit 2102 may include a receiving unit and/or a sending unit, which are respectively configured to perform a receiving operation and a sending operation. Optionally, the communication apparatus 2100 may further include a storage unit, configured to store program code and/or data of the communication apparatus 2100. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the foregoing terminal device, the IAB-DU, the donor CU, or the like.

FIG. 22 is a simplified diagram of a structure of a terminal device according to this application. For ease of understanding and illustration, an example in which the terminal device is a mobile phone is used in FIG. 22. As shown in FIG. 22, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave.

The input/output apparatus, such as a touchscreen, a display, or a keyboard, is mainly configured to: receive data input by a user and output data to the user.

It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in the form of the electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 22 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 22, the terminal device 2200 includes the transceiver unit 2210 and the processing unit 2220. The transceiver unit 2210 may also be referred to as a transceiver, a transceiver machine, a transceiver apparatus, or the like. The processing unit 2220 may also be referred to as a processor, a processing board, a processing unit, a processing apparatus, or the like.

Optionally, a component for implementing a receiving function in the transceiver unit 2210 may be considered as a receiving unit, and a component for implementing a sending function in the transceiver unit 2210 may be considered as a sending unit. That is, the transceiver unit 2210 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 2210 is configured to perform a sending operation and a receiving operation of the terminal device in the foregoing method embodiments, and the processing unit 2220 is configured to perform an operation other than the sending and receiving operations of the terminal device in the foregoing method embodiments.

When the terminal device is a chip, the chip includes the transceiver unit 2210 and the processing unit 2220. The transceiver unit 2210 may be an input/output circuit or a communication interface. The processing unit 2220 is a processor, a microprocessor, an integrated circuit, or a logic circuit integrated on the chip.

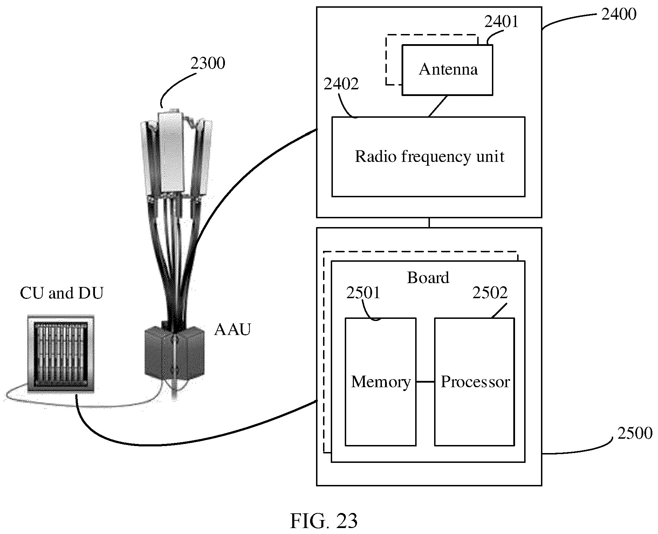

This application further provides a network device. FIG. 23 is a diagram of a structure of a network device 2300 according to an embodiment of this application. The network device 2300 may be applied to the system shown in FIG. 1. For example, the network device 2300 may be an IAB-DU or a donor CU, and is configured to perform a function of the network device in the foregoing method embodiments. It should be understood that the following is merely an example. In a future communication system, the network device may have another form and composition.

For example, in a 5G communication system, the network device 2300 may include a CU, a DU, and an AAU. In comparison with a network device in an LTE communication system that includes one or more radio frequency units, for example, a remote radio unit (remote radio unit, RRU) and one or more building baseband units (building baseband units, BBUs),

a non-real-time part of the original BBU is split off and redefined as the CU, which is responsible for processing a non-real-time protocol and service, some physical layer processing functions of the BBU are combined with the original RRU and a passive antenna into the AAU, and remaining functions of the BBU are redefined as the DU, which is responsible for processing a physical layer protocol and a real-time service. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form, as shown in FIG. 23, is consistent with that of a conventional 4G network device. The CU and the DU are deployed on same hardware. It should be understood that FIG. 23 is merely an example, and constitutes no limitation on the protection scope of this application. For example, a deployment form may alternatively be that DUs are deployed in a BBU equipment room, CUs or DUs are deployed together, or CUs are centralized at a higher level.

An AAU 2400 may implement a transceiver function corresponding to the transceiver unit 2102 in FIG. 21. Optionally, the AAU 2400 may also be referred to as a transceiver machine, a transceiver circuit, a transceiver, or the like, and may include at least one antenna 2401 and a radio frequency unit 2402. Optionally, the AAU 2400 may include a receiving unit and a sending unit. The receiving unit may correspond to a receiver (or referred to as a receiving machine or a receiving circuit), and the sending unit may correspond to a transmitter (or referred to as a transmitting machine or a transmitting circuit). An internal processing function that can be implemented by the CU and a DU 2500 corresponds to a function of the processing unit 2101 in FIG. 21. Optionally, the CU and the DU 2500 may control the network device or the like, and may be referred to as controllers. The AAU, the CU, and the DU may be physically arranged together, or may be physically arranged separately.

In addition, the network device is not limited to the form shown in FIG. 23, and may alternatively be in another form. For example, the network device includes a BBU and an adaptive radio unit (adaptive radio unit, ARU), or includes a BBU and an AAU; or may be a customer premises equipment (customer premises equipment, CPE), or may be in another form. This is not limited in this application.

In an example, the CU and the DU 2500 may include one or more boards. A plurality of boards may jointly support a radio access network (for example, an LTE network) of a single access standard, or may respectively support radio access networks (for example, an LTE network, a 5G network, a future network, or another network) of different access standards. The CU and the DU 2500 further include a memory 2501 and a processor 2502. The memory 2501 is configured to store necessary instructions and necessary data. The processor 2502 is configured to control the network device to perform a necessary action, for example, is configured to control the network device to perform an operation procedure related to the network device in the foregoing method embodiments. The memory 2501 and the processor 2502 may serve the one or more boards. In other words, a memory and a processor may be disposed on each board. Alternatively, the plurality of boards may share a same memory and a same processor. In addition, a necessary circuit may further be disposed on each board.

It should be understood that the network device 2300 shown in FIG. 23 can implement functions of the network device in the method embodiment in FIG. 7. Operations and/or functions of units in the network device 2300 are separately used to implement corresponding procedures performed by the network device in the method embodiments of this application. To avoid repetition, detailed descriptions are appropriately omitted herein. The structure of the network device shown in FIG. 23 is merely a possible form, but shall not constitute any limitation on embodiments of this application. This application does not exclude a possibility that there may be a network device structure in another form in the future.

The CU and the DU 2500 may be configured to perform an action that is described in the foregoing method embodiments and that is implemented inside the network device, and the AAU 2400 may be configured to perform an action of sending from the network device to the terminal device and an action of receiving from the terminal device in the foregoing method embodiments. For details, refer to the descriptions in the foregoing method embodiments. Details are not described herein again.

An embodiment of this application further provides a communication system. The communication system includes the first CU, the second CU, the third CU, and the IAB node.

Based on the foregoing embodiments, an embodiment of this application further provides a readable storage medium. The readable storage medium stores instructions. When the instructions are executed, the method in any one of the foregoing embodiments is implemented. The readable storage medium may include any medium that can store program code, such as a USB flash drive, a removable hard disk, a read-only memory, a random access memory, a magnetic disk, or an optical disc.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or the block diagrams of the method, the apparatus (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by a computer or the processor of another programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

**Claims**

1. A communication method, wherein the method is applied to a first central unit CU or a module in the first CU, and the method comprises:

receiving a first message, wherein the first message comprises an identifier ID that identifies a mobile terminal MT of an integrated access and backhaul IAB node in a third CU, and an ID of the third CU;

determining, based on the first message, whether to perform migration of a distributed unit DU of the IAB node; and

sending a second message to the IAB node when determining to perform migration of the DU of the IAB node, wherein the second message indicates the DU of the IAB node to set up an F1 interface with the third CU.

2. The method according to claim 1, wherein the second message indicates the DU of the IAB node to generate a new logical DU and set up the F1 interface with the third CU.

3. The method according to claim 1 or 2, wherein the first message further comprises an IP address of the third CU or an IP address of a donor DU managed by the third CU.

4. The method according to any one of claims 1 to 3, wherein the determining, based on the first message, whether to perform migration of a DU of the IAB node comprises:

determining, based on the first message, whether the first CU can reach, without using a core network, the third CU or the donor DU managed by the third CU;

determining, based on the first message, whether the first CU can set up an Xn interface with the third CU; or

determining, based on the first message, whether the first CU can reach, through IP routing, the third CU or the donor DU managed by the third CU.

5. The method according to any one of claims 1 to 4, wherein there is a radio resource control RRC connection between the MT and a second CU, or a topology under the third CU is a topology to which the MT is to be handed over from a topology under the second CU.

6. The method according to claim 5, wherein the first message indicates any one of the following: the MT is to be handed over from the topology under the second CU to the topology under the third CU, the MT has completed the handover from the topology under the second CU to the topology under the third CU, or a radio link failure occurs between the MT and the second CU and the MT accesses the topology under the third CU.

7. The method according to claim 1, wherein there is a radio resource control RRC connection between the MT and a second CU; and the method further comprises:

sending a third message to the second CU when determining to perform migration of the DU of the IAB node, wherein the third message is used for requesting the second CU to configure, in a topology under the second CU, a resource for the F1 interface between the DU of the IAB node and the third CU.

8. The method according to claim 7, wherein the first message indicates that the MT is to be handed over from the topology under the second CU to a topology under the third CU; and after the sending a third message to the second CU, the method further comprises:

receiving a fourth message, wherein the fourth message indicates that the F1 interface between the DU of the IAB node and the third CU has been set up.

9. The method according to claim 8, wherein after the receiving a fourth message, the method further comprises:

sending a fifth message to the second CU after sending a first handover command to a terminal device, wherein the first handover command indicates the terminal device to be handed over to a target cell served by the DU of the IAB node, and the fifth message indicates that the first CU has sent the first handover command.

10. The method according to any one of claims 1 to 9, wherein the method further comprises:

initiating, to the third CU, an IAB transport migration management procedure in partial migration when determining not to perform migration of the DU of the IAB node, wherein the procedure is used for cross-topology migration of traffic.

11. The method according to claim 10, wherein the initiating, to the third CU, an IAB transport migration management procedure in partial migration comprises:

sending a sixth message to an access and mobility management function network element, wherein the sixth message comprises an IP address of the traffic of the IAB node under the third CU and quality of service QoS information of the traffic of the IAB node; and

receiving a seventh message from the access and mobility management function network element, wherein the seventh message comprises backhaul link information under the third CU, and differentiated services code point or flow label information of the traffic of the IAB node.

12. A communication method, wherein the method is applied to a second central unit CU or a module in the second CU, and the method comprises:

generating a first message; and
sending the first message to a first CU, wherein the first message indicates any one of the following: a mobile terminal MT of an integrated access and backhaul IAB node is to be handed over from a topology under the second CU to a topology under the third CU, the MT has completed the handover from the topology under the second CU to the topology under the third CU, or a radio link failure occurs between the MT and the second CU and the MT accesses the topology under the third CU.

13. The method according to claim 12, wherein after the sending the first message to a first CU, the method further comprises:

receiving a third message from the first CU; and
configuring, based on the third message and in the topology under the second CU, a resource for an F1 interface between a distributed unit DU of the IAB node and the third CU.

14. The method according to claim 12 or 13, wherein before the sending the first message to a first CU, the method further comprises:
receiving an eighth message from the third CU, wherein the eighth message indicates any one of the following: the MT of the IAB node is to be handed over to the topology under the third CU, the MT has been handed over to the topology under the third CU, or the MT has accessed the topology under the third CU after a radio link failure occurs between the MT and the second CU.

15. The method according to claim 14, wherein the eighth message comprises an IP address of the third CU and/or an IP address of a donor DU managed by the third CU.

16. The method according to any one of claims 13 to 15, wherein the first message comprises an ID that identifies the MT in the third CU, and an ID of the third CU.

17. The method according to any one of claims 12 to 16, wherein the method further comprises:

receiving a fifth message from the first CU, wherein the fifth message indicates that the first CU has sent a first handover command to a terminal device, and the first handover command is used for the terminal device to be handed over to a target cell served by the DU of the IAB node; and
sending a second handover command to the MT, wherein the second handover command is used for the MT of the IAB node to be handed over to the topology under the third CU.

18. A communication method, wherein the method is applied to a third central unit CU or a module in the third CU, and the method comprises:

generating a first message; and
sending the first message to a first CU, wherein the first message indicates any one of the following: a mobile terminal MT of an integrated access and backhaul IAB node is to be handed over from a topology under a second CU to a topology under the third CU, the MT has completed the handover from the topology under the second CU to the topology under the third CU, or a radio link failure occurs between the MT and the second CU and the MT accesses the topology under the third CU.

19. The method according to claim 18, wherein after the sending the first message to a first CU, the method further comprises:
sending a fourth message to the first CU, wherein the fourth message indicates that an F1 interface between a distributed unit DU of the IAB node and the third CU has been set up.

20. The method according to claim 18 or 19, wherein the first message comprises an ID that identifies the MT in the third CU, and an ID of the third CU.

21. The method according to any one of claims 18 to 20, wherein before the sending the first message to the first CU, the method further comprises:
sending a ninth message to the second CU or receiving a tenth message from the second CU, wherein the ninth message indicates that the MT is to be handed over to the topology under the third CU or the MT has been handed over to the topology under the third CU, and the tenth message indicates that the MT has been handed over to the topology under the third CU.

22. The method according to claim 21, wherein the ninth message comprises an IP address of the third CU and/or an IP address of a donor DU managed by the third CU.

23. The method according to claim 21 or 22, wherein the tenth message comprises an ID of the MT under the first CU.

24. The method according to any one of claims 18 to 23, wherein the method further comprises:
responding to an IAB transport migration management procedure in partial migration initiated by the first CU to the third CU.

25. The method according to claim 24, wherein the responding to an IAB transport migration management procedure in partial migration initiated by the first CU to the third CU comprises:

receiving an eleventh message from an access and mobility management function network element, wherein the eleventh message comprises an IP address of traffic of the IAB node under the third CU and QoS information of the traffic of the IAB node; and
sending a twelfth message to the access and mobility management function network element, wherein the twelfth message comprises backhaul link information under the third CU, and differentiated services code point or flow label information of the traffic of the IAB node.

26. A communication apparatus, comprising a module or a unit configured to implement the method according to any one of claims 1 to 11.

27. A communication apparatus, comprising a module or a unit configured to implement the method according to any one of claims 12 to 17.

28. A communication apparatus, comprising a module or a unit configured to implement the method according to any one of claims 18 to 25.

29. A computer-readable storage medium, wherein the computer-readable storage medium stores a computer program, the computer program comprises program instructions, and when the program instructions are executed, a computer is enabled to perform the method according to any one of claims 1 to 25.

30. A communication apparatus, comprising a processor, wherein the processor is coupled to a memory, the memory stores computer program instructions, and the processor is configured to execute the computer program instructions, to enable the communication apparatus to perform the method according to any one of claims 1 to 25.

31. A communication method, wherein the method is applied to a distributed unit DU of an integrated access and backhaul IAB node, and the method comprises:

generating, by the DU of the IAB node, a first message, wherein the first message carries an identifier ID that identifies a mobile terminal MT of the IAB node in a third central unit CU, and an ID of the third CU; and
sending, by the DU of the IAB node, the first message to a first CU.

32. The method according to claim 31, wherein the sending, by the DU of the IAB node, the first message to a first CU comprises:
sending, by the DU of the IAB node, the first message to the first CU when the MT of the IAB node is handed over from a topology under a second CU to a topology under the third CU.

33. A communication method, wherein the method is applied to a first central unit CU or a module in the first CU, and the method comprises:
receiving a first message from a distributed unit DU of an integrated access and backhaul IAB node, wherein the first message carries an identifier ID that identifies a mobile terminal MT of the IAB node in a third CU, and an ID of the third CU.

34. A communication method, wherein the method is applied to a distributed unit DU of an integrated access and backhaul IAB node, and the method comprises:

   receiving, by the DU of the IAB node, a second message from a first central unit CU, wherein the second message comprises an identifier ID of a third CU; and
   setting up, by the DU of the IAB node, an F1 interface with the third CU based on the second message.

35. The method according to claim 34, wherein the second message indicates the DU of the IAB node to set up the F1 interface with the third CU.

36. A communication method, wherein the method is applied to a first central unit CU or a module in the first CU, and the method comprises:

   generating a second message, wherein the second message comprises an identifier ID of a third CU; and
   sending the second message to a distributed unit DU of an integrated access and backhaul IAB node.

37. The method according to claim 36, wherein the second message indicates the DU of the IAB node to set up an F1 interface with the third CU.

38. A communication method, wherein the method is applied to a distributed unit DU of an integrated access and backhaul IAB node, and the method comprises:

   generating, by the DU of the IAB node, a fourth message, wherein the fourth message comprises a base station identifier gNB ID of a third central unit CU, and the fourth message indicates that an F1 interface between the DU of the IAB node and the third CU has been set up; and
   sending, by the DU of the IAB node, the fourth message to a first CU.

39. The method according to claim 38, wherein the fourth message further comprises a base station distributed unit identifier gNB-DU ID of the DU of the IAB node.

40. A communication method, wherein the method is applied to a first central unit CU or a module in the first CU, and the method comprises:
receiving a fourth message from a distributed unit DU of an integrated access and backhaul IAB node, wherein the fourth message comprises a base station identifier gNB ID of a third central unit CU, and the fourth message indicates that an F1 interface between the DU of the IAB node and the third CU has been set up.

41. The method according to claim 40, wherein the fourth message further comprises a base station distributed unit identifier gNB-DU ID of the DU of the IAB node.

42. A communication apparatus, comprising a module configured to implement the method according to claim 31 or 32.

43. A communication apparatus, comprising a module configured to implement the method according to claim 33.

44. A communication apparatus, comprising a module configured to implement the method according to claim 34 or 35.

45. A communication apparatus, comprising a module configured to implement the method according to claim 36 or 37.

46. A communication apparatus, comprising a module configured to implement the method according to claim 38 or 39.

47. A communication apparatus, comprising a module configured to implement the method according to claim 40 or 41.

48. A computer-readable storage medium, wherein the computer-readable storage medium stores a computer program, the computer program comprises program instructions, and when the program instructions are executed, a computer is enabled to perform the method according to any one of claims 31 to 41.

49. A communication apparatus, comprising a processor, wherein the processor is coupled to a memory, the memory stores computer program instructions, and the processor is configured to execute the computer program instructions, to enable the communication apparatus to perform the method according to any one of claims 31 to 41.

50. A computer program product, wherein the computer program product comprises a computer program, the computer program comprises program instructions, and when the program instructions are executed, a computer is enabled to perform the method according to any one of claims 31 to 41.

Core network
device 110

Radio access
network device 120

Wireless backhaul
device 130

Terminal
device 140

Terminal
device 150

FIG. 1

IAB node 5

UE 2

IAB node 2

IAB node 4

IAB node 1

Donor base
station

IAB node 3

UE 1

FIG. 2

FIG. 3

FIG. 4

FIG. 5

FIG. 6

**EP 4 580 254 A1**

FIG. 7

41

FIG. 8

FIG. 9

FIG. 10

FIG. 11

| mIAB-DU 2 | mIAB-DU 1 | mIAB-MT | First CU | Second CU | Third CU |
|---|---|---|---|---|---|

First message 1201

First message 1201'

First message 1201"

1202

Determine, based on the first message, whether to perform migration of a DU of an IAB node

Second message 1203

1204

The DU of the IAB node sets up an F1 interface with the third CU based on the second message

1203'

The first CU initiates, to the third CU, an IAB transport migration management procedure in partial migration when determining not to perform migration of the DU of the IAB node

Third message 1203"

1204"

Configure, based on the third message and in a topology under the second CU, a resource for an F1 interface between the third CU and a new logical DU generated by the DU of the IAB node

FIG. 12

FIG. 13

| Terminal device | mIAB-DU 2 | mIAB-DU 1 | mIAB-MT | First CU | Second CU | Third CU |
|---|---|---|---|---|---|---|

1401
Message 2
(MT HO response)

First message 1402

First message 1402'

1403

Determine, based on the first message, whether to perform migration of a DU of an IAB node

Third message 1404

1405

Configure, based on the third message and in a topology under the second CU, a resource for an F1 interface between the third CU and a new logical DU generated by the DU of the IAB node

1406

The IAB node generates the new logical DU, and sets up the F1 interface that is between the new logical DU and the third CU and that passes through the second CU

Fourth message 1407

Fourth message 1407'

1408

The first CU initiates a UE HO preparation procedure to the third CU

First handover command 1409

Fifth message 1410

Second handover command 1411

FIG. 14

FIG. 15

FIG. 16

| mIAB-DU 2 | mIAB-DU 1 | mIAB-MT | First CU | Second CU | Third CU |
|-----------|-----------|---------|----------|-----------|----------|

1701

Message 1
(MT HO request)

1702

Message 2
(MT HO response)

Handover command 1703

1704

The MT of an IAB node performs a handover process according to the handover command

1705

First message

1706

Determine, based on the first message, whether to perform migration of a DU of the IAB node

Second message 1707

1708

The DU of the IAB node sets up an F1 interface with the third CU based on the second message

1707'

The first CU initiates, to the third CU, an IAB transport migration management procedure in partial migration when determining not to perform migration of the DU of the IAB node

FIG. 17

| mIAB-DU 2 | mIAB-DU 1 | mIAB-MT | First CU | Second CU | Third CU |

DU migration request 1801

DU migration response 1802

Second message 1803

DU migration request 1801'

DU migration response 1802'

Second message 1803'

DU migration request 1801"

Second message 1802"

**FIG. 18**

| First CU | AMF | Third CU |

Sixth message 1901

Eleventh message 1902

Twelfth message 1903

Seventh message 1904

**FIG. 19**

| Terminal device | mIAB-DU | mIAB-MT | CU |

2000

Preconfigure one or more of the following: a PCI list, a CGI list, a TAC list and a RANAC list

2001

An IAB node detects a cell identity (including a PCI or a CGI) conflict

2002

First message (indicating a cell that the IAB node expects to activate)

2003

Second message (used for activating the cell that the IAB node expects to activate)

Handover command  2004

2005

Hand over, according to the handover command, to the cell that the IAB node expects to activate, and send a handover complete message to the CU

Handover complete message

2006

Third message (used for turning off a cell that the IAB node expects to turn off)

FIG. 20

Communication
apparatus 2100

Transceiver unit
2102

Processing unit
2101

FIG. 21

2200

Antenna

2210

Radio frequency circuit

Memory

Processor

2220

Input/Output apparatus

FIG. 22

FIG. 23

## INTERNATIONAL SEARCH REPORT

| International application No. |
|---|
| **PCT/CN2023/127192** |

| **A.** | **CLASSIFICATION OF SUBJECT MATTER** |
|---|---|

H04W 36/00(2009.01)i

According to International Patent Classification (IPC) or to both national classification and IPC

| **B.** | **FIELDS SEARCHED** |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, USTXT, CNKI, 3GPP: 集中式单元, 分布式单元, 迁移, 连续, 目标, 部分迁移, CU, centralized, du, distributed, migration, migrate, target, CU3, consecutive, partial migration, context request, HANDOVER REQUES, CONTEXT RELEASE

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | ERICSSON. "CB # IAB2_Mobility-Summary of email discussion" *3GPP TSG-RAN WG3 Meeting #117-bis-e, R3-225937*, 13 October 2022 (2022-10-13), sections 3.1-3.4 | 1-5, 7, 10, 26, 29-37, 42-45, 48-50 |
| A | CN 114071617 A (DATANG MOBILE COMMUNICATIONS EQUIPMENT CO., LTD.) 18 February 2022 (2022-02-18) entire document | 1-50 |
| A | CN 111194054 A (ZTE CORP.) 22 May 2020 (2020-05-22) entire document | 1-50 |
| A | US 2021051547 A1 (NOKIA SOLUTIONS & NETWORKS OY) 18 February 2021 (2021-02-18) entire document | 1-50 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 January 2024** | **18 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/127192**

| Patent document cited in search report | | | Publication date (day/month/year) | Patent family member(s) | | | Publication date (day/month/year) |
|---|---|---|---|---|---|---|---|
| CN | 114071617 | A | 18 February 2022 | WO | 2022028593 | A1 | 10 February 2022 |
| CN | 111194054 | A | 22 May 2020 | WO | 2020098730 | A1 | 22 May 2020 |
| US | 2021051547 | A1 | 18 February 2021 | EP | 3780738 | A1 | 17 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211372936